# EUROPEAN PATENT SPECIFICATION

(11) **EP 4 015 929 B1**
(45) Date of publication and mention of the grant of the patent: **06.03.2024**
(21) Application number: 20866206.4
(22) Date of filing: 07.09.2020
(51) Int. Cl.: F24F 11/74, F24F 11/79, F24F 13/20, F24F 1/0011, F24F 110/10, F24F 1/0057, F24F 11/65

(54) **AIR CONDITIONING INDOOR UNIT AND AIR CONDITIONER**
KLIMAANLAGENINNENRAUMEINHEIT UND KLIMAANLAGE
UNITÉ INTÉRIEURE DE CLIMATISATION ET CLIMATISEUR

(30) Priority: 17.09.2019 JP 2019168889
(43) Date of publication of application: 22.06.2022
(73) Proprietor: Daikin Industries, Ltd., Osaka-shi, Osaka 530-0001 (JP)
(72) Inventor: TSUTSUMI, Tomohiko, Osaka-shi, Osaka 530-8323 (JP); UGAI, Kouji, Osaka-shi, Osaka 530-8323 (JP); YAMAKAWA, Takeshi, Osaka-shi, Osaka 530-8323 (JP); ITOU, Hiroshi, Osaka-shi, Osaka 530-8323 (JP); NISHIDA, Teruo, Osaka-shi, Osaka 530-8323 (JP)
(74) Representative: Hoffmann Eitle
(86) International application number: PCT/JP2020/033797
(87) International publication number: WO 2021/054181

(56) References cited:
- EP-A1- 3 358 266
- JP-A- 2004 317 109
- JP-A- 2004 317 109
- JP-A- 2013 076 530
- JP-A- 2017 067 401

## Description

### TECHNICAL FIELD

The present invention relates to an air conditioning indoor unit and an air conditioner including the air conditioning indoor unit.

### BACKGROUND ART

Conventionally, an example of an air conditioning indoor unit includes a casing having a blow-out port, a first horizontal blade attached to a leading edge of the blow-out port, and a second horizontal blade attached to a trailing edge of the blow-out port (see, for example, JP 2017-125678 A). The first and second horizontal blades adjust an up-and-down wind direction of blow-out air flowing from the blow-out port of the casing into an indoor space.

EP 3 358 266 discloses an air conditioning indoor unit according to the preamble of claim 1 including a body casing, a front flap, a rear flap, a front flap drive motor, a rear flap drive motor, and an indoor side control component. JP 2004-317109 discloses an air conditioner which harmonizes the air taken in an indoor unit and delivers it to a room.

### SUMMARY OF INVENTION

### TECHNICAL PROBLEMS

The above-described conventional air conditioning indoor unit can flow the blow-out air diagonally downward in front by adjusting wind directions of the first and second horizontal blades during a heating operation. At this time, there is a problem that if the blow-out air hits a user, the user feels cold even if the temperature of the blow-out air is higher than room temperature because the wind speed of the blow-out air is high.

An object of the present disclosure is to provide an air conditioning indoor unit that can inhibit the user from feeling cold during the heating operation.

### SOLUTIONS TO PROBLEMS

An air conditioning indoor unit according to one aspect of the present invention is defined in claim 1. Preferred embodiments are defined in the dependent claims. According to the invention, the air conditioning unit includes:
a casing attached to a wall surface facing an air conditioning target space and including a blow-out port;
a fan disposed in the casing and configured to send air to the blow-out port;
a first horizontal blade configured to adjust an up-and-down wind direction of blow-out air flowing from the blow-out port to the air conditioning target space;
a first drive unit configured to drive the first horizontal blade;
a second horizontal blade disposed on a side of the wall surface of the first horizontal blade and configured to adjust the up-and-down wind direction of the blow-out air;
a second drive unit configured to drive the second horizontal blade; and
a control device configured to control the fan and the first and second drive units,
in which a heating operation is possible
in a first airflow control mode in which a distance between the first horizontal blade and the second horizontal blade is wider on a downstream side of a flow of the blow-out air than on an upstream side of the flow of the blow-out air, the blow-out air flows diagonally downward on an opposite side of the wall surface side, part of the blow-out air flows along a lower wing surface of the first horizontal blade, and another part of the blow-out air flows along an upper wing surface of the second horizontal blade,
in a second airflow control mode in which the blow-out air flows along a horizontal direction, and
in a third airflow control mode in which the blow-out air flows on the wall surface side more than in the first airflow control mode, and
after the heating operation starts, the control device switches the second airflow control mode, the first airflow control mode, and the third airflow control mode in this order.

Here, the lower wing surface of the first horizontal blade corresponds to the surface located on the air conditioning target space side when the operation is stopped. The upper wing surface of the second horizontal blade corresponds to the surface located on the opposite side of the air conditioning target space (inside of the casing) when the operation is stopped.

With the above-described configuration, when the heating operation starts, the first airflow control mode is selected after the second airflow control mode and before the third airflow control mode. In the first airflow control mode, the distance between the first horizontal blade and the second horizontal blade is wider on the downstream side of the flow of the blow-out air than on the upstream side of the flow of the blow-out air. Accordingly, the blow-out air flows in a spreading out manner, reducing the wind speed of each part of the blow-out air. Therefore, in the heating operation, it is possible to inhibit the user from feeling cold even if the blow-out air hits the user.

When the air conditioning indoor unit includes a floor temperature sensor configured to detect a temperature of a floor facing the air conditioning target space, in which
in the first airflow control mode, at least when the temperature of the floor detected by the floor temperature sensor becomes equal to or higher than a first predetermined temperature, the control device switches the first airflow control mode to the third airflow control mode, at least when the temperature of the floor detected by the floor temperature sensor becomes equal to or higher than the first predetermined temperature, the first airflow control mode is switched to the third airflow control mode. Therefore, the air conditioning indoor unit makes it possible to inhibit the heating operation of the third airflow control mode when the floor is not warm.

When the heating operation is possible in a fourth airflow control mode in which a separation angle between the first horizontal blade and the second horizontal blade is smaller than in the first airflow control mode, and the blow-out air flows diagonally downward on the opposite side of the wall surface,
in the fourth airflow control mode, at least when the temperature of the floor detected by the floor temperature sensor becomes equal to or higher than a second predetermined temperature, the control device switches the fourth airflow control mode to the third airflow control mode, and
the second predetermined temperature is lower than the first predetermined temperature, at least when the temperature of the floor detected by the floor temperature sensor becomes equal to or higher than the second predetermined temperature lower than the first predetermined temperature, the fourth airflow control mode is switched to the third airflow control mode. Therefore, the air conditioning indoor unit makes it possible to execute the heating operation of the third airflow control mode before the air conditioning target space becomes too warm.

The air conditioning indoor unit according to the present invention further includes an indoor temperature sensor configured to detect an indoor temperature, in which
in the third airflow control mode, at least when the indoor temperature detected by the indoor temperature sensor becomes equal to or lower than a third predetermined temperature, the control device switches the third airflow control mode to the first airflow control mode.

According to the above-described aspect, at least when the indoor temperature detected by the indoor temperature sensor becomes equal to or lower than the third predetermined temperature, the third airflow control mode is switched to the first airflow control mode. Therefore, the air conditioning indoor unit makes it possible to effectively inhibit the air conditioning target space from getting cold.

In the air conditioning indoor unit according to one aspect,
when the third airflow control mode is switched to the first airflow control mode, the control device controls the fan and the first and second drive units to cause at least one of the first and second horizontal blades to be driven after the number of revolutions of the fan increases.

According to the above-described aspect, when the third airflow control mode is switched to the first airflow control mode, the control device causes at least one of the first and second horizontal blades to be driven after the number of revolutions of the fan increases. Therefore, the air conditioning indoor unit makes it possible to inhibit the separation of airflow from at least one of the first and second horizontal blades.

In the air conditioning indoor unit according to the present invention, in the third airflow control mode, the blow-out air flows downward along the wall surface.

According to the above-described aspect, in the third airflow control mode, the blow-out air flows downward along the wall surface. As a result, the possibility that the blow-out air directly hits the user is very low.

An air conditioner according to another preferred embodiment of the present invention includes:
the air conditioning indoor unit of any one of the plurality of air conditioning indoor units; and
an air conditioning outdoor unit connected to the air conditioning indoor unit via a refrigerant pipe.

With the above-described configuration, since the air conditioner includes the air conditioning indoor unit, it is possible to inhibit the user from feeling cold even if the blow-out air hits the user in the heating operation.

### BRIEF DESCRIPTION OF DRAWINGS

FIG. 1 is a refrigerant circuit diagram of an air conditioner in a first embodiment of the present disclosure.
FIG. 2 is a schematic cross-sectional view of an indoor unit in an operation stop state in the first embodiment of the present disclosure.
FIG. 3 is an internal configuration diagram of the indoor unit.
FIG. 4 is a control block diagram of the air conditioner.
FIG. 5 is a schematic cross-sectional view of the indoor unit in a first airflow control mode.
FIG. 6 is a schematic cross-sectional view of the indoor unit in a second airflow control mode.
FIG. 7 is a schematic cross-sectional view of the indoor unit in a third airflow control mode.
FIG. 8 is a schematic cross-sectional view of the indoor unit in a fourth airflow control mode.
FIG. 9 is a perspective view of a first horizontal flap in the first embodiment of the present disclosure.
FIG. 10 is a plan view of the first horizontal flap.
FIG. 11 is a bottom view of the first horizontal flap.
FIG. 12 is a cross-sectional view taken along the line XII-XII of FIG. 11.
FIG. 13 is a cross-sectional view taken along the line XIII-XIII of FIG. 11.
FIG. 14 is a perspective view of a second horizontal flap in the first embodiment of the present disclosure.
FIG. 15 is a plan view of the second horizontal flap.
FIG. 16 is a bottom view of the second horizontal flap.
FIG. 17 is a cross-sectional view taken along the line XVII-XVII of FIG. 16.
FIG. 18 is a cross-sectional view taken along the line XVIII-XVIII of FIG. 16.
FIG. 19 is a simulation result diagram of blow-out air of the indoor unit in the first embodiment.
FIG. 20 is another simulation result diagram of the blow-out air of the indoor unit in the first embodiment.
FIG. 21 is a simulation result diagram of blow-out air of an indoor unit in a comparative example.
FIG. 22 is a simulation result diagram of the blow-out air of the indoor unit in the comparative example.
FIG. 23 is an image diagram of the blow-out air of the indoor unit in the first embodiment.
FIG. 24 is a diagram for describing a wind speed of the blow-out air of the indoor unit in the first embodiment.
FIG. 25 is a flowchart for describing control in a heating operation of the air conditioner.
FIG. 26 is a diagram for describing the flow of the blow-out air in the second airflow control mode.
FIG. 27 is a diagram for describing the flow of the blow-out air in the first airflow control mode.
FIG. 28 is a diagram for describing the flow of the blow-out air in the third airflow control mode.
FIG. 29 is a control block diagram of an air conditioner in a second embodiment of the present disclosure.

### DESCRIPTION OF EMBODIMENTS

An air conditioning indoor unit and an air conditioner of the present invention will be described in detail below with embodiments shown in the drawings. Note that common parts are denoted with the same reference symbols in each diagram, and duplicate descriptions will be omitted.

### [First embodiment]

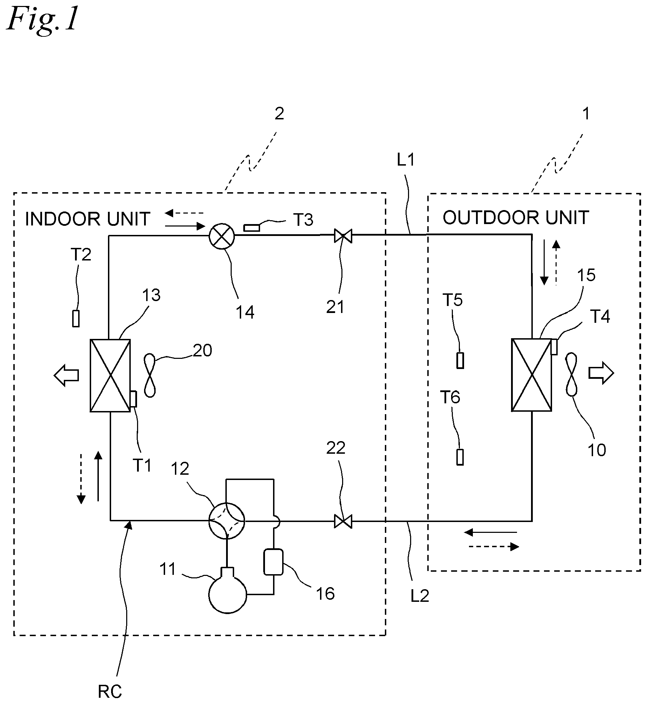

FIG. 1 is a diagram showing a refrigerant circuit RC provided in an air conditioner of a first embodiment of the present disclosure. This air conditioner is a pair type in which an indoor unit 1 is paired one-to-one with an outdoor unit 2. The indoor unit 1 is one example of an air conditioning indoor unit. The outdoor unit 2 is one example of an air conditioning outdoor unit. Connection pipes L1 and L2 are one example of refrigerant pipes.

The air conditioner includes: a compressor 11; a four-way switching valve 12 having one end connected to the discharge side of the compressor 11; an outdoor heat exchanger 13 having one end connected to the other end of the four-way switching valve 12; an electric expansion valve 14 having one end connected to the other end of the outdoor heat exchanger 13; an indoor heat exchanger 15 having one end connected to the other end of the electric expansion valve 14 via a shutoff valve 21 and the connection pipe L1; and an accumulator 16 having one end connected to the other end of the indoor heat exchanger 15 via the connection pipe L2, a shutoff valve 22, and the four-way switching valve 12, and the other end connected to the intake side of the compressor 11. Here, the compressor 11, the four-way switching valve 12, the outdoor heat exchanger 13, the electric expansion valve 14, the indoor heat exchanger 15, the accumulator 16, and the like constitute the refrigerant circuit RC of the air conditioner. The indoor heat exchanger 15, an indoor fan 10, and the like constitute the indoor unit 1. Meanwhile, the compressor 11, the four-way switching valve 12, the outdoor heat exchanger 13, the electric expansion valve 14, the accumulator 16, an outdoor fan 20, and the like constitute the outdoor unit 2. The indoor fan 10 is one example of a fan. The electric expansion valve 14 is one example of a decompression mechanism.

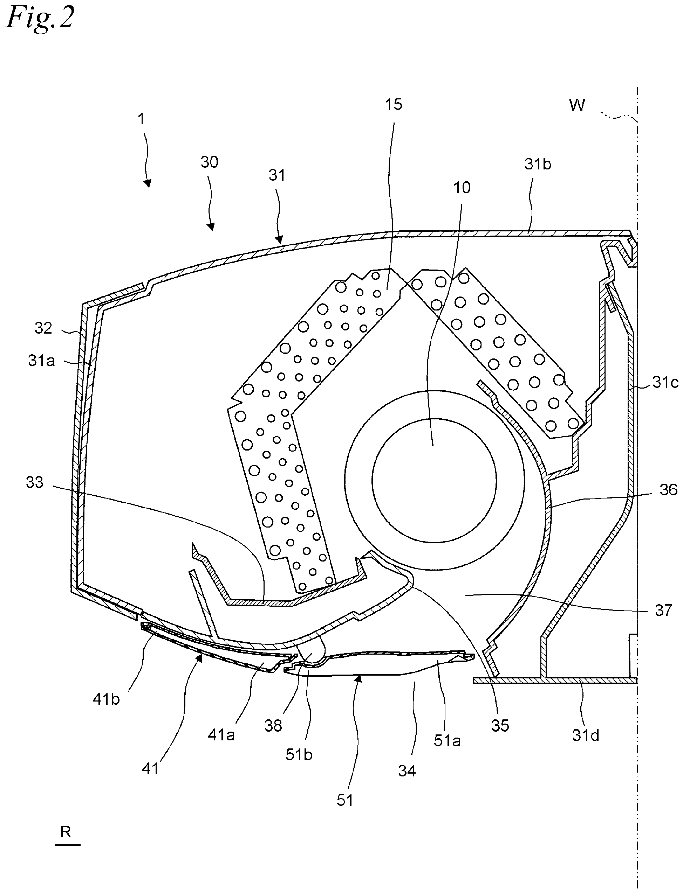

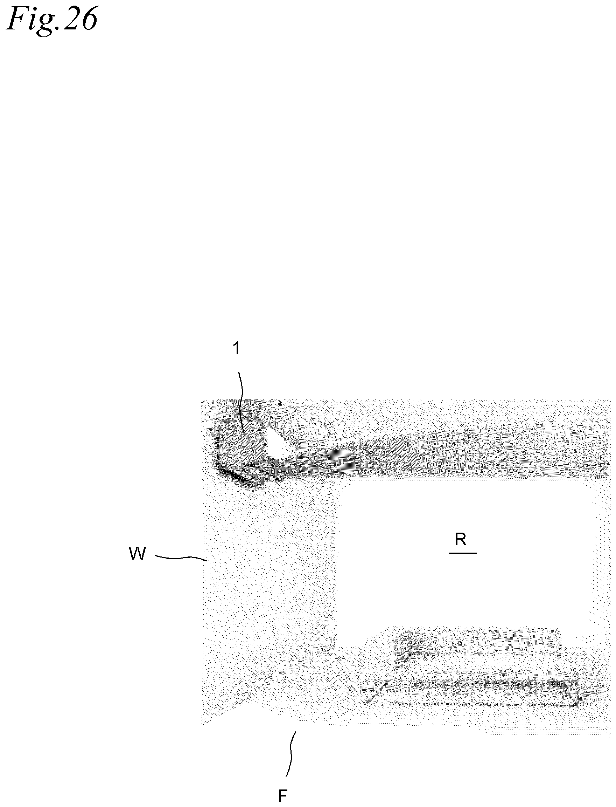

The indoor unit 1 includes an indoor heat exchanger temperature sensor T4 that detects the temperature of the indoor heat exchanger 15, an indoor temperature sensor T5 that detects the indoor temperature, and a floor temperature sensor T6 that detects the temperature of a floor F (shown in FIGS. 26 to 28 and 30) facing an indoor space R (shown in FIGS. 2 and 5 to 8). The indoor fan 10 that circulates indoor air via the indoor heat exchanger 15 is installed in the indoor unit 1. For example, a thermistor or the like is used as the indoor heat exchanger temperature sensor T4 and the indoor temperature sensor T5. For example, an infrared temperature sensor or the like is used as the floor temperature sensor T6. The indoor space R is one example of an air conditioning target space.

The outdoor unit 2 includes an outdoor heat exchanger temperature sensor T1 that detects the temperature of the outdoor heat exchanger 13, an outdoor air temperature sensor T2 that detects the outdoor air temperature, and an evaporation temperature sensor T3 that detects the evaporation temperature of the electric expansion valve 14. The outdoor fan 20 that supplies outside air to the outdoor heat exchanger 13 is installed in the outdoor unit 2. For example, a thermistor or the like is used as the outdoor heat exchanger temperature sensor T1, the outdoor air temperature sensor T2, and the evaporation temperature sensor T3.

The air conditioner includes a remote controller that is not shown in the drawings (hereinafter referred to as "remote control device"). Manipulation of the remote control device makes it possible to start or stop one of operations such as a cooling operation, dehumidifying operation, and heating operation, and to switch to another operation. Manipulation of the remote control device also makes it possible to change the set temperature for the indoor temperature and adjust the airflow volume of the air blown out by the indoor unit 1.

When the cooling operation or the dehumidifying operation is selected with the remote control device and the four-way switching valve 12 is switched to the state of the solid line in FIG. 1, a refrigerant from the compressor 11 flows through the refrigerant circuit RC in the order of the four-way switching valve 12, the outdoor heat exchanger 13, the electric expansion valve 14, the indoor heat exchanger 15, the four-way switching valve 12, and the accumulator 16, as shown by the solid arrow. Meanwhile, when the heating operation is selected and the four-way switching valve 12 is switched to the state of the broken line in FIG. 1, the refrigerant from the compressor 11 flows through the refrigerant circuit RC in the order of the four-way switching valve 12, the indoor heat exchanger 15, the electric expansion valve 14, the outdoor heat exchanger 13, the four-way switching valve 12, and the accumulator 16, as shown by the broken arrow.

FIG. 2 is a schematic vertical cross-sectional view of the indoor unit 1 in an operation stop state. The indoor unit 1 is a wall-mounted type.

The indoor unit 1 includes a casing 30 including a casing body 31 and a front panel 32. The casing 30 is attached to a wall surface W facing the indoor space R, and houses the indoor fan 10, the indoor heat exchanger 15, a drain pan 33, and the like. The indoor space R is one example of the air conditioning target space.

The casing body 31 includes a plurality of members and includes a front surface portion 31a, an upper surface portion 31b, a rear surface portion 31c, and a lower surface portion 31d. The front panel 32 is attached to the front surface portion 31a in an openable and closable manner. An intake port (not shown) is provided from the front surface portion 31a to the upper surface portion 31b.

The front panel 32 covers the front surface portion 31a of the indoor unit 1, and has, for example, a flat shape with no intake port. An upper end of the front panel 32 is pivotably supported by the upper surface portion 3 1b of the casing body 31 and can operate as a hinge.

The indoor fan 10 and the indoor heat exchanger 15 are attached to the casing body 31. The indoor heat exchanger 15 exchanges heat with the indoor air taken into the casing 30 via the intake port. The shape of the side view of the indoor heat exchanger 15 is an inverted V shape with both ends facing downward and a bent portion located on the upper side. The indoor fan 10 is located below the bent portion of the indoor heat exchanger 15. The indoor fan 10 is, for example, a cross-flow fan, and sends the indoor air that has passed through the indoor heat exchanger 15 to a blow-out port 34 of the lower surface portion 31d of the casing body 31.

First and second partition walls 35 and 36 are provided in the casing body 31. The space sandwiched between the first partition wall 35 and the second partition wall 36 is a blow-out channel 37 that connects the indoor fan 10 to the blow-out port 34.

The drain pan 33 is disposed below the front part of the indoor heat exchanger 15 and receives condensate from the front part. This condensate is discharged to the outdoors via a drain hose (not shown).

The indoor unit 1 includes a first horizontal flap 41 and a second horizontal flap 51 disposed on the rear side (wall surface W side) of the first horizontal flap 41. The first horizontal flap 41 and the second horizontal flap 51 adjust the up-and-down wind direction of the blow-out air that flows through the blow-out channel 37 and blows out of the blow-out port 34. The first horizontal flap 41 is one example of a first horizontal blade. The second horizontal flap 51 is one example of a second horizontal blade.

The first horizontal flap 41 includes a first end 41a and a second end 41b. The first end 41a is disposed upstream of the flow of the blow-out air during the operation of the indoor unit 1. The second end 41b is disposed downstream of the flow of the blow-out air during the operation of the indoor unit 1. The first horizontal flap 41 is pivotably attached to the lower surface portion 31d of the casing body 31.

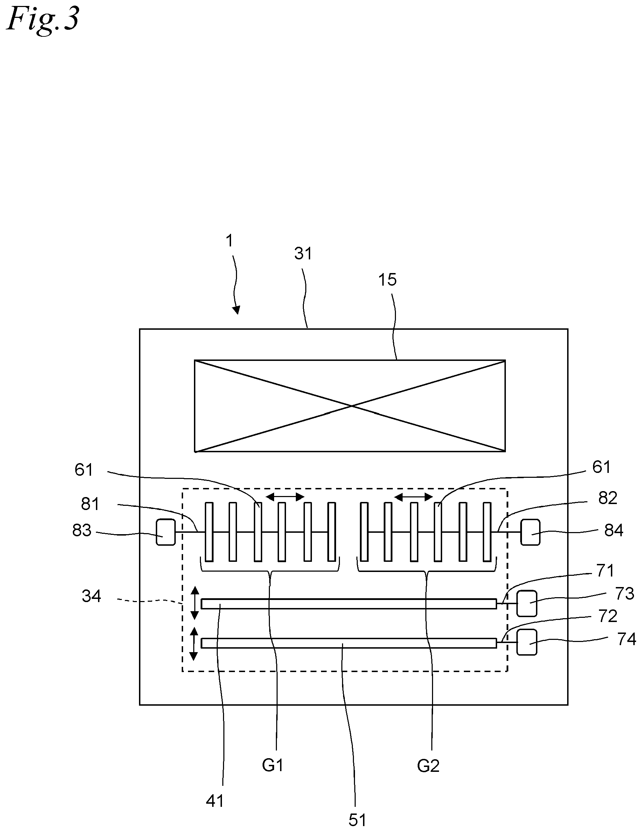

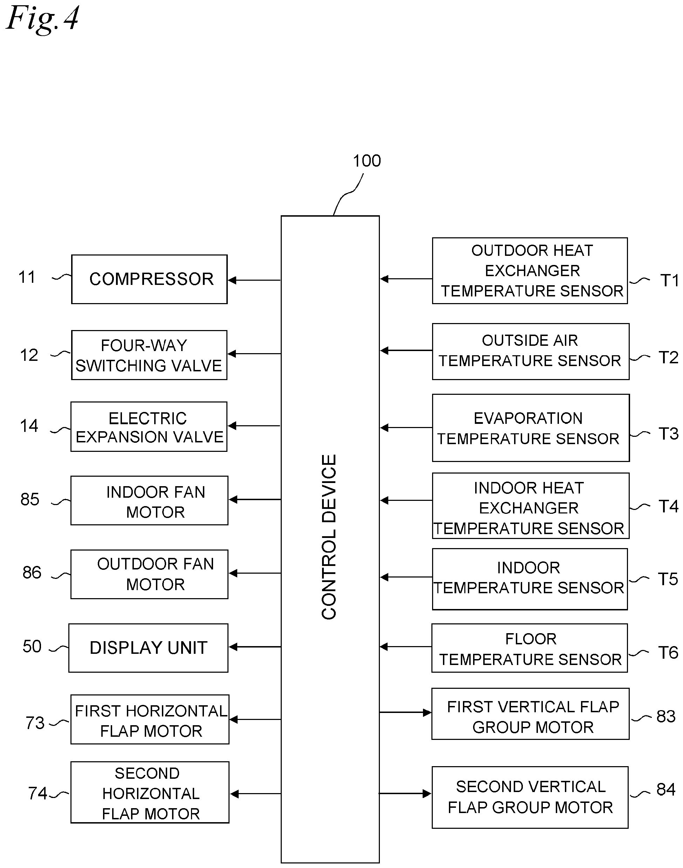

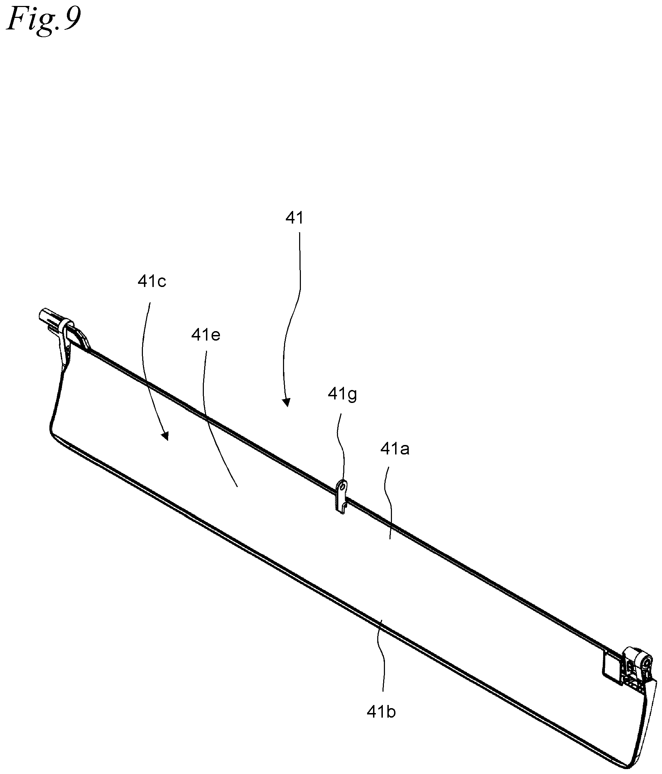

In more detail, the first horizontal flap 41 includes a piece 41g connected to the second end 41b (shown in FIGS. 9 to 13). The piece 41g is attached to an attachment part 38 of the casing body 31, and the first horizontal flap 41 is pivotable around the attachment part 38. When the operation of the indoor unit 1 is stopped, the first horizontal flap 41 takes a posture along the front portion of the lower surface portion 31d of the casing body 31. When the operation of the indoor unit 1 starts, a first horizontal flap motor 73 (shown in FIGS. 3 and 4) drives the first horizontal flap 41 to pivot, and the distance between the front portion of the lower surface portion 31d of the casing body 31 and the second end 41b of the first horizontal flap 41 increases. At this time, the first horizontal flap 41 can take a plurality of inclined postures with respect to the horizontal plane. As the first horizontal flap motor 73, for example, a four-phase winding stepping motor is used.

The second horizontal flap 51 includes a first end 51a and a second end 51b in a similar manner to the first horizontal flap 41. The first end 51a is disposed upstream of the flow of the blow-out air. The second end 51b is disposed downstream of the flow of the blow-out air. In the second horizontal flap 51, the first end 51a is pivotably attached to the lower surface portion 31d of the casing body 31.

In more detail, when the operation of the indoor unit 1 is stopped, the second horizontal flap 51 takes a posture to close the blow-out port 34. When the operation of the indoor unit 1 starts, a second horizontal flap motor 74 (shown in FIGS. 3 and 4) drives the second horizontal flap 51. This causes the second horizontal flap 51 to pivot around the first end 51a, whereby the second end 51b separates from the attachment part 38 to open the blow-out port 34. At this time, the second horizontal flap 51 can take a plurality of inclined postures with respect to the horizontal plane. As the second horizontal flap motor 74, for example, a four-phase winding stepping motor is used.

The indoor unit 1 includes a plurality of perpendicular flaps 61 (shown in FIG. 3) that adjusts the right-and-left wind direction of the blow-out air. The plurality of perpendicular flaps 61 is arranged in the blow-out channel 37 at predetermined intervals along a longitudinal direction of the blow-out port 34 (direction perpendicular to the paper surface of FIG. 2). The perpendicular flap 61 is one example of a perpendicular blade.

FIG. 3 is a schematic diagram showing the internal configuration of the indoor unit 1.

The first and second horizontal flaps 41 and 51 are pivotably supported by first and second rotating shafts 71 and 72, respectively, in the up-and-down direction. The first and second horizontal flap motors 73 and 74 drive the first and second rotating shafts 71 and 72 to rotate, respectively, thereby causing the first and second horizontal flaps 41 and 51 to pivot in the up-and-down direction. Note that the first horizontal flap motor 73 is one example of a first drive unit. The second horizontal flap motor 74 is one example of a second drive unit.

The plurality of perpendicular flaps 61 is divided into a first perpendicular flap group G1 and a second perpendicular flap group G2. The perpendicular flaps 61 constituting the first perpendicular flap group G1 are one example of the perpendicular blades on one side of the plurality of perpendicular blades. The perpendicular flaps 61 constituting the second perpendicular flap group G2 are one example of the perpendicular blades on the other side of the plurality of perpendicular blades.

The first perpendicular flap group G1 includes the plurality of perpendicular flaps 61 facing an opening region on the left side of the center in the right-and-left direction of the blow-out port 34. The perpendicular flaps 61 belonging to the first perpendicular flap group G1 are coupled to each other by a first coupling rod 81. A first perpendicular flap group motor 83 drives the first coupling rod 81 in the right-and-left direction, thereby causing the plurality of perpendicular flaps 61 to pivot in the right-and-left direction around respective pivotal axes (not shown).

The second perpendicular flap group G2 includes the plurality of perpendicular flaps 61 facing an opening region on the right side of the center in the right-and-left direction of the blow-out port 34. The perpendicular flaps 61 belonging to the second perpendicular flap group G2 are also coupled to a second coupling rod 82 and can pivot by a second perpendicular flap group motor 84, in a similar manner to the perpendicular flaps 61 belonging to the first perpendicular flap group G1.

FIG. 4 is a control block diagram of the air conditioner.

The air conditioner includes a control device 100 including a microcomputer, an input-output circuit, and the like. The control device 100 includes an indoor control unit (not shown) provided on the indoor unit 1 side and an outdoor control unit (not shown) provided on the outdoor unit 2 side.

Based on signals from the outdoor heat exchanger temperature sensor T1, the outdoor air temperature sensor T2, the evaporation temperature sensor T3, the indoor heat exchanger temperature sensor T4, the indoor temperature sensor T5, and other sensors, the control device 100 controls the compressor 11, the four-way switching valve 12, an indoor fan motor 85, an outdoor fan motor 86, a display unit 50, the first horizontal flap motor 73, the second horizontal flap motor 74, the first perpendicular flap group motor 83, the second perpendicular flap group motor 84, and the like. The display unit 50 is an LED provided in the indoor unit 1 to display at least the operating state, or the like. The indoor fan motor 85 drives the indoor fan 10. The outdoor fan motor 86 drives the outdoor fan 20.

The indoor unit 1 can operate in a first airflow control mode, a second airflow control mode, a third airflow control mode, and a fourth airflow control mode (for example, cooling operation, heating operation, and the like). Based on the above-described signals and the like, one airflow control mode may be automatically selected from among the first airflow control mode, the second airflow control mode, the third airflow control mode, and the fourth airflow control mode, which will be described later, or may be switched to another airflow control mode. Manipulation of the remote control device also makes it possible to select one of the first airflow control mode, the second airflow control mode, the third airflow control mode, and the fourth airflow control mode.

### <First airflow control mode>

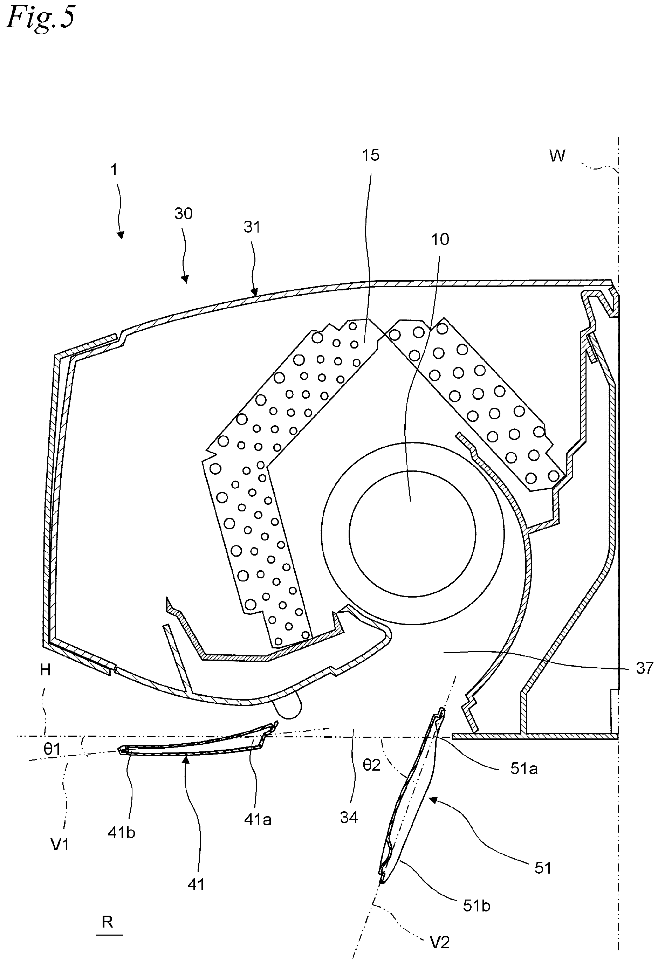

FIG. 5 is a schematic vertical cross-sectional view of the indoor unit 1 in the first airflow control mode.

In the first airflow control mode, the distance between the first horizontal flap 41 and the second horizontal flap 51 is wider on the downstream side of the flow of the blow-out air than on the upstream side of the flow of the blow-out air, and the blow-out air flowing from the blow-out port 34 to the indoor space R flows diagonally downward on the front side (side opposite the wall surface W side).

In more detail, when a virtual plane V1 passing through the center of a thickness direction of the first end 41a of the first horizontal flap 41 and the center of the thickness direction of the second end 41b of the first horizontal flap 41 is defined, an inclination angle θ1 of the virtual plane V1 with respect to a horizontal plane H in the first airflow control mode is, for example, +10°. Meanwhile, when a virtual plane V2 passing through the center of a thickness direction of the first end 51a of the second horizontal flap 51 and the center of the thickness direction of the second end 51b is defined, an inclination angle θ2 of the virtual plane V2 with respect to the horizontal plane H in the first airflow control mode is, for example, +70°. At this time, the separation angle between the first horizontal flap 41 and the second horizontal flap 51 is, for example, 60°. When the inclination angles θ1 and θ2 are + angles, the front side of the virtual planes V1 and V2 is located below the rear side of the virtual planes V1 and V2. The separation angle corresponds to the angle obtained by subtracting the inclination angle θ1 from the inclination angle θ2.

In other words, when pivoted by 25° from the state where the operation of the indoor unit 1 is stopped, the first horizontal flap 41 takes the posture in the first airflow control mode. Meanwhile, when pivoted by 70° from the state where the operation of the indoor unit 1 is stopped, the second horizontal flap 51 takes the posture in the first airflow control mode. Here, the angle obtained by subtracting the pivot angle of the first horizontal flap 41 from the pivot angle of the second horizontal flap 51 is the separation angle between the first horizontal flap 41 and the second horizontal flap 51 in the first airflow control mode.

In the first airflow control mode, each perpendicular flap 61 of the first perpendicular flap group G1 takes an inclined posture such that the downstream end of the flow of the blow-out air is located on the left side of the casing 30 more than the upstream end of the flow of the blow-out air. In the first airflow control mode, each perpendicular flap 61 of the second perpendicular flap group G2 takes an inclined posture such that the downstream end of the flow of the blow-out air is located on the right side of the casing 30 more than the upstream end of the flow of the blow-out air.

In more detail, the distance between the perpendicular flap 61 of the first perpendicular flap group G1 and the perpendicular flap 61 of the second perpendicular flap group G2 is wider on the downstream side of the flow of the blow-out air than on the upstream side of the flow of the blow-out air. In other words, each perpendicular flap 61 of the first perpendicular flap group G1 pivots such that the end located on the downstream side of the flow of the blow-out air is closer to the left side surface of the casing body 31, and that the end located on the upstream side of the flow of the blow-out air is away from the left side surface of the casing body 31. Meanwhile, each perpendicular flap 61 of the second perpendicular flap group G2 pivots such that the end located on the downstream side of the flow of the blow-out air is closer to the right side surface of the casing body 31, and that the end located on the upstream side of the flow of the blow-out air is away from the right side surface of the casing body 31.

### <Second airflow control mode>

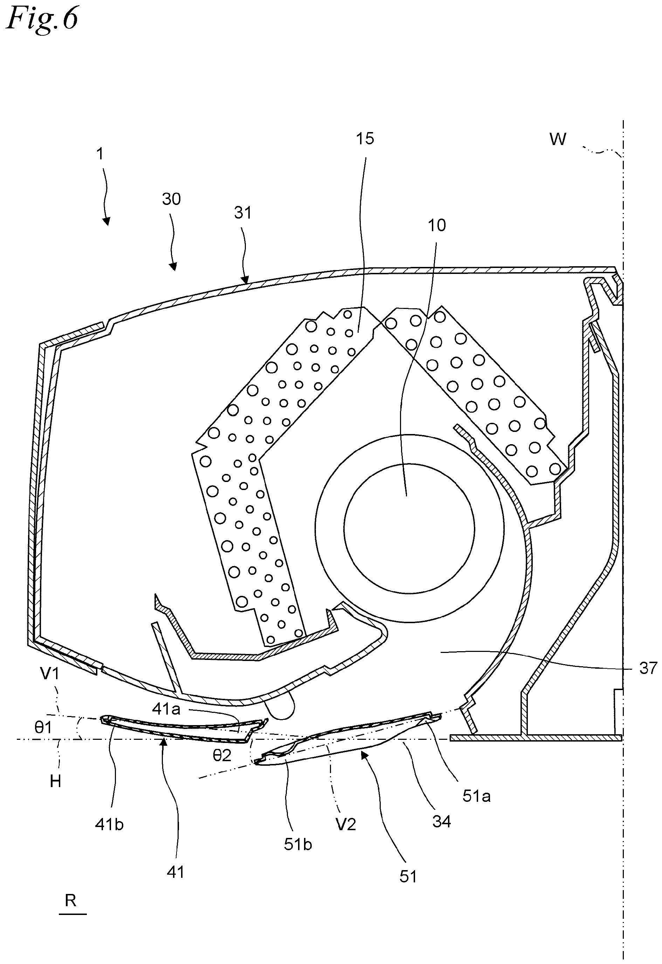

FIG. 6 is a schematic vertical cross-sectional view of the indoor unit 1 in the second airflow control mode.

In the second airflow control mode, the blow-out air flowing from the blow-out port 34 to the indoor space R flows horizontally.

In more detail, in the second airflow control mode, the inclination angle θ1 of the virtual plane V1 with respect to the horizontal plane H is, for example, -5°. Meanwhile, in the second airflow control mode, the inclination angle θ2 of the virtual plane V2 with respect to the horizontal plane H is, for example, +15°. At this time, the inclination angles θ1 and θ2 are smaller than in the first airflow control mode. Conversely, the inclination angles θ1 and θ2 in the first airflow control mode are larger than the inclination angles θ1 and θ2 in the second airflow control mode. When the inclination angle θ1 is a - angle, the front side of the virtual plane V1 is located above the rear side of the virtual plane V1.

In other words, when pivoted by 10° from the state where the operation of the indoor unit 1 is stopped, the first horizontal flap 41 takes the posture in the second airflow control mode. Meanwhile, when pivoted by 15° from the state where the operation of the indoor unit 1 is stopped, the second horizontal flap 51 takes the posture in the second airflow control mode.

### <Third airflow control mode>

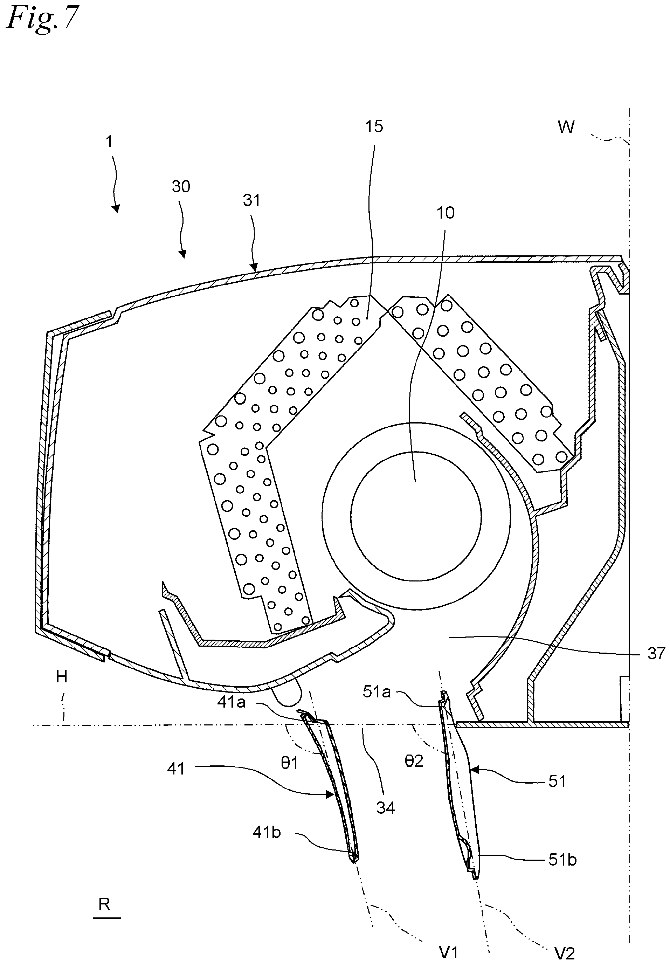

FIG. 7 is a schematic vertical cross-sectional view of the indoor unit 1 in the third airflow control mode.

In the third airflow control mode, the blow-out air flowing from the blow-out port 34 to the indoor space R flows downward along the wall surface W.

In more detail, in the third airflow control mode, the inclination angle θ1 of the virtual plane V1 with respect to the horizontal plane H is, for example, +105°. Meanwhile, in the third airflow control mode, the inclination angle θ2 of the virtual plane V2 with respect to the horizontal plane H is, for example, +100°.

In other words, when pivoted by 125° from the state where the operation of the indoor unit 1 is stopped, the first horizontal flap 41 takes the posture in the third airflow control mode. Meanwhile, when pivoted by 100° from the state where the operation of the indoor unit 1 is stopped, the second horizontal flap 51 takes the posture in the third airflow control mode.

### <Fourth airflow control mode>

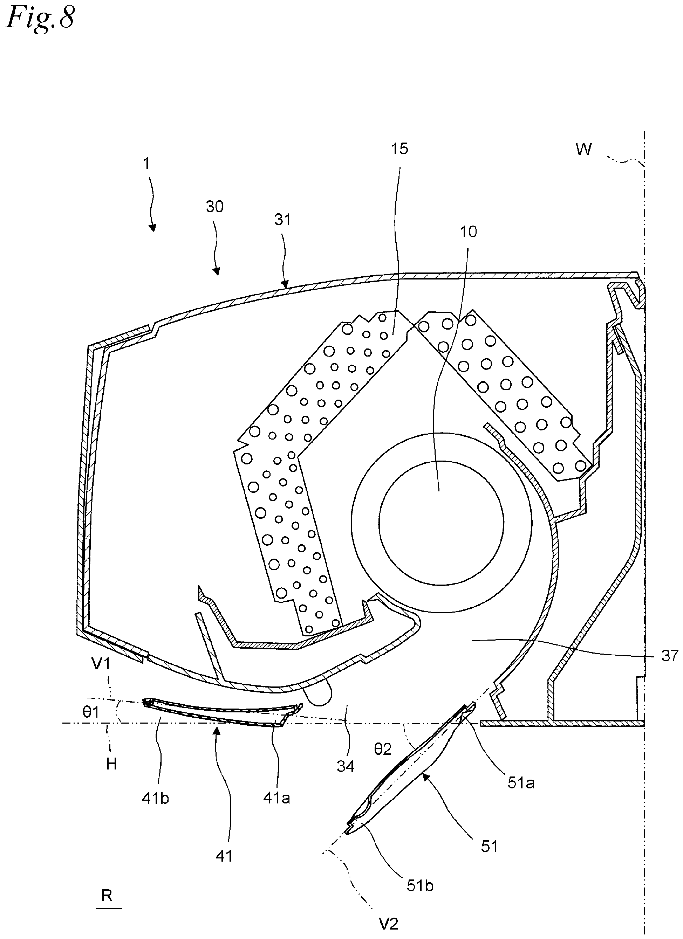

FIG. 8 is a schematic vertical cross-sectional view of the indoor unit 1 in the fourth airflow control mode.

In the fourth airflow control mode, the distance between the first horizontal flap 41 and the second horizontal flap 51 is wider on the downstream side of the flow of the blow-out air than on the upstream side of the flow of the blow-out air, and the blow-out air flowing from the blow-out port 34 to the indoor space R flows diagonally downward on the front side. At this time, the up-and-down expansion of the blow-out air is smaller than in the first airflow control mode.

In more detail, in the fourth airflow control mode, the inclination angle θ1 of the virtual plane V1 with respect to the horizontal plane H is, for example, -5°. Meanwhile, in the fourth airflow control mode, the inclination angle θ2 of the virtual plane V2 with respect to the horizontal plane H is, for example, +45°. At this time, the separation angle between the first horizontal flap 41 and the second horizontal flap 51 is, for example, 50°. The separation angle corresponds to the angle obtained by subtracting the inclination angle θ1 from the inclination angle θ2.

In other words, when pivoted by 15° from the state where the operation of the indoor unit 1 is stopped, the first horizontal flap 41 takes the posture in the fourth airflow control mode. Meanwhile, when pivoted by 52.5° from the state where the operation of the indoor unit 1 is stopped, the second horizontal flap 51 takes the posture in the fourth airflow control mode. Here, the angle obtained by subtracting the pivot angle of the first horizontal flap 41 from the pivot angle between the second horizontal flap 51 is the separation angle of the first horizontal flap 41 and the second horizontal flap 51 in the fourth airflow control mode.

### <Configuration of first horizontal flap 41>

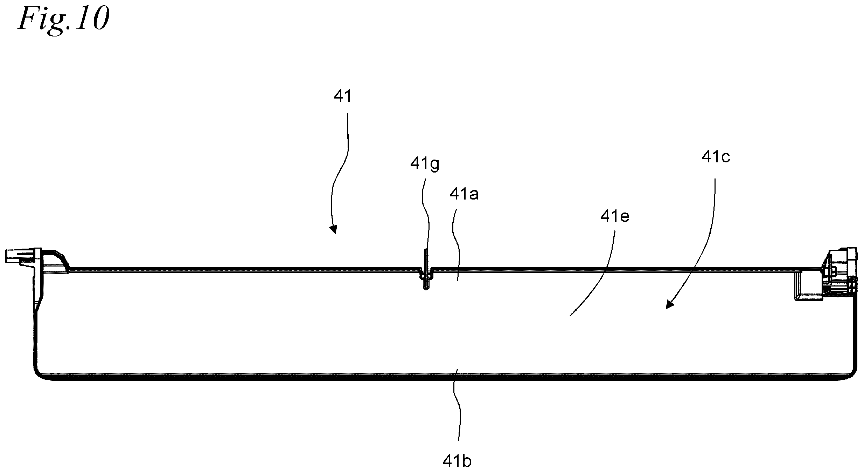

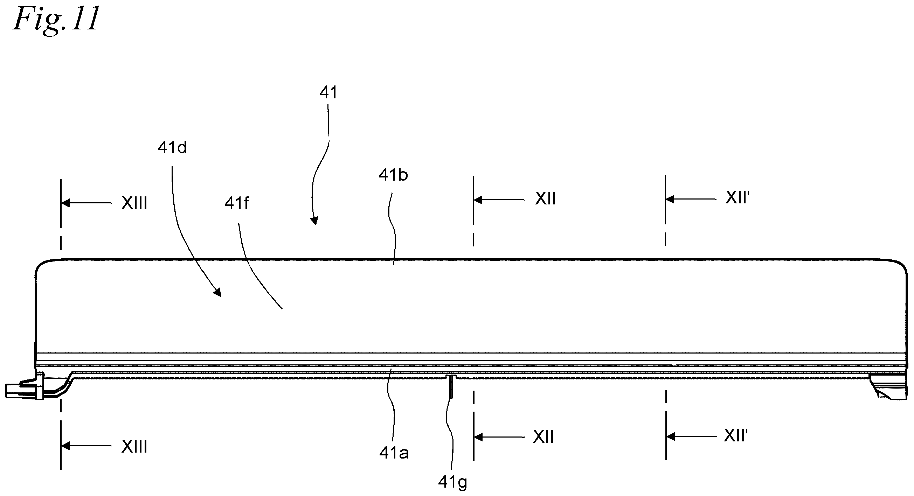

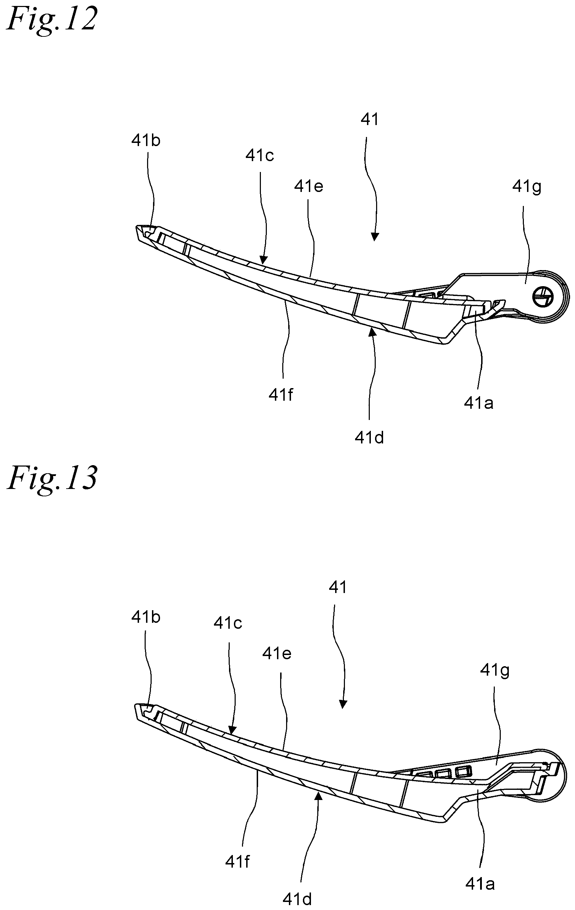

FIG. 9 is a perspective view of an upper wing surface 41c of the first horizontal flap 41. FIG. 10 is a front view of the upper wing surface 41c of the first horizontal flap 41. FIG. 11 is a front view of a lower wing surface 41d of the first horizontal flap 41. FIG. 12 is a cross-sectional view seen from the line XII-XII of FIG. 11. FIG. 13 is a cross-sectional view seen from the line XIII-XIII of FIG. 11. Note that the cross-sectional view seen from the line XII'-XII' of FIG. 11 is similar to the cross-sectional view of FIG. 12, and thus the illustration will be omitted.

As shown in FIGS. 9 to 13, the first horizontal flap 41 shows a shape in which the thickness becomes thinner as approaching from the first end 41a side to the second end 41b side, except for some part on the first end 41a side. The first horizontal flap 41 includes the upper wing surface 41c and the lower wing surface 41d. The upper wing surface 41c faces the casing body 31 when the operation of the indoor unit 1 is stopped. The lower wing surface 41d faces the indoor space when the operation of the indoor unit 1 is stopped.

The upper wing surface 41c includes a curved surface 41e that is curved and recessed in the thikness direction of the first horizontal flap 41. In other words, when the first horizontal flap 41 is cut along a lateral direction of the first horizontal flap 41, the line showing the cross section of the upper wing surface 41c includes a curved line protruding to the lower wing surface 41d side. Here, the lateral direction of the first horizontal flap 41 corresponds to a direction orthogonal to a longitudinal direction of the first horizontal flap 41 and the thickness direction of the first horizontal flap 41.

The lower wing surface 41d includes a curved surface 41f that is curved and protrudes in the thickness direction of the first horizontal flap 41. In other words, when the first horizontal flap 41 is cut along the lateral direction, the line showing the cross section of the lower wing surface 41d includes a curved line protruding on the opposite side of the upper wing surface 41c.

The radius of curvature of the curved surface 41e of the upper wing surface 41c is set to be smaller than the radius of curvature of the curved surface 41f of the lower wing surface 41d of the first horizontal flap 41.

The curved surfaces 41e and 41f are provided from one end of the longitudinal direction of the first horizontal flap 41 to the other end of the longitudinal direction of the first horizontal flap 41.

### <Configuration of second horizontal flap 51>

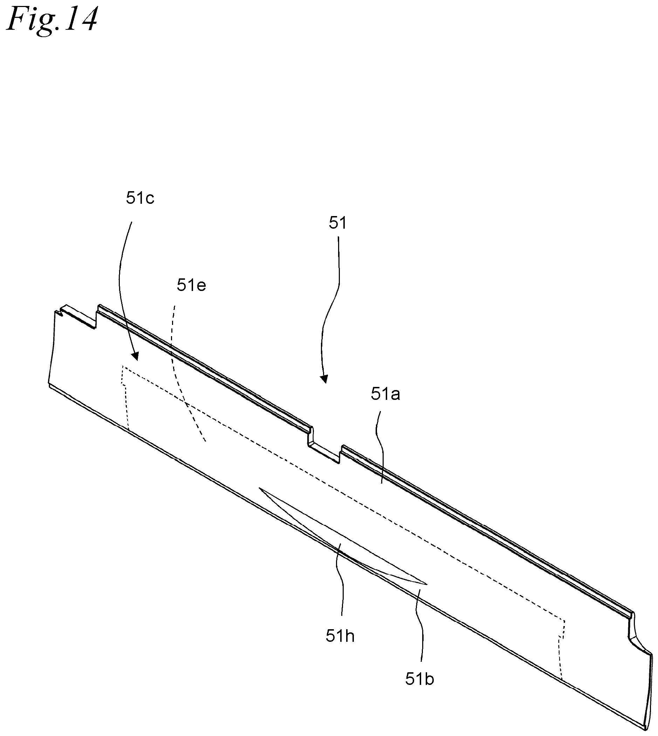

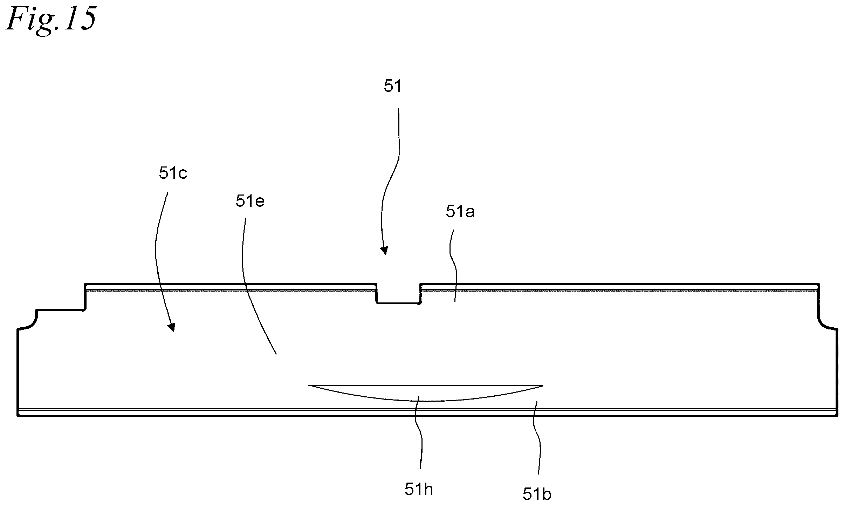

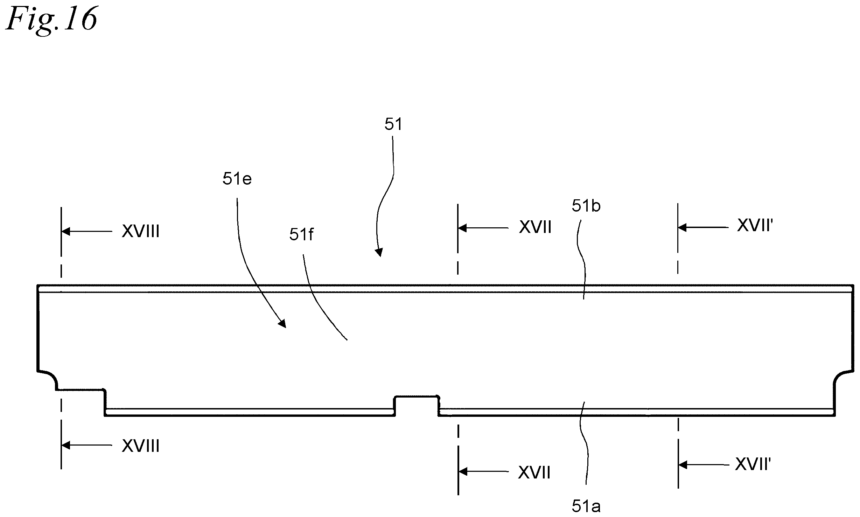

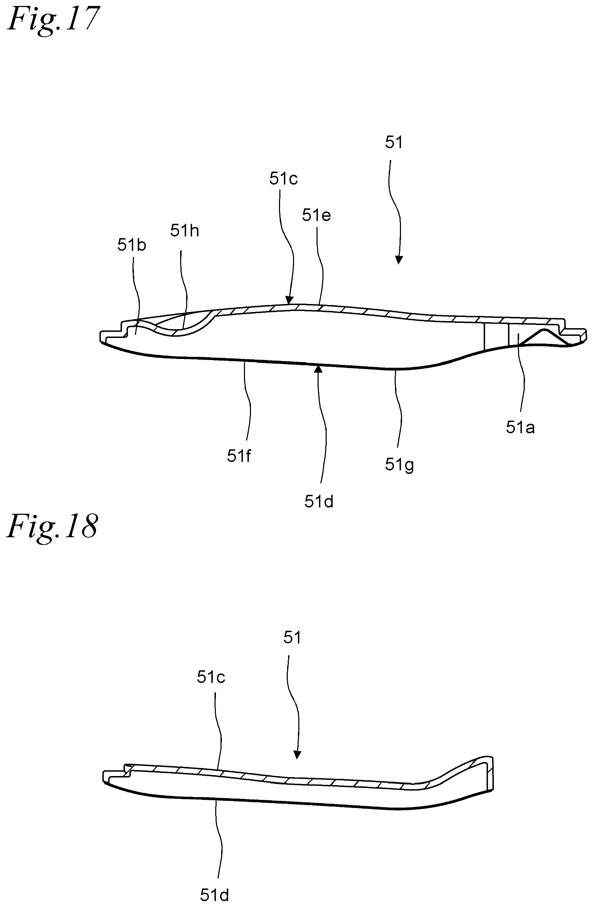

FIG. 14 is a perspective view of an upper wing surface 51c of the second horizontal flap 51. FIG. 15 is a front view of the upper wing surface 51c of the second horizontal flap 51. FIG. 16 is a front view of a lower wing surface 51d of the second horizontal flap 51. FIG. 17 is a cross-sectional view seen from the line XVII-XVII of FIG. 16. FIG. 18 is a cross-sectional view seen from the line XVIII-XVIII of FIG. 16. Note that the cross-sectional view seen from the line XV'-XV' of FIG. 16 is similar to the cross-sectional view of FIG. 17, and thus the illustration will be omitted.

As shown in FIGS. 14 to 18, the second horizontal flap 51 includes the upper wing surface 51c facing the blow-out channel 37 when the operation of the indoor unit 1 is stopped and the lower wing surface 51d facing the indoor space when the operation of the indoor unit 1 is stopped. In the second horizontal flap 51, the thickness of the central portion between the first end 51a and the second end 51b is thicker than the thickness of the first end 51a and the second end 51b.

The upper wing surface 51c includes a curved surface 51e that is curved and protrudes in the thickness direction of the second horizontal flap 51. In other words, when the second horizontal flap 51 is cut along a lateral direction of the second horizontal flap 51, the line showing the cross section of the upper wing surface 51c includes a curved line protruding on the opposite side of the lower wing surface 51d. Here, the lateral direction of the second horizontal flap 51 corresponds to a direction orthogonal to a longitudinal direction of the second horizontal flap 51 and the thickness direction of the second horizontal flap 51.

A concave portion 51h located on the second end 51b side is provided on the upper wing surface 51c. When the operation of the indoor unit 1 is stopped, part of the attachment part 38 enters the concave portion 51h to prevent the second horizontal flap 51 from interfering with the attachment part 38.

The lower wing surface 51d includes a first curved surface 51f that is curved and recessed in the thickness direction of the second horizontal flap 51, and a second curved surface 51g that is curved and protrudes in the thickness direction of the second horizontal flap 51. In other words, when the second horizontal flap 51 is cut along the lateral direction, the line showing the cross section of the lower wing surface 5 1d includes a curved line protruding to the upper wing surface 51c side and a curved line protruding on the opposite side of the upper wing surface 51c.

The first curved surface 51f is provided on the second end 51b side of the lower wing surface 51d, and overlaps with the curved surface 51e in the thickness direction of the second horizontal flap 51.

The second curved surface 51g is provided on the first end 51a side of the lower wing surface 51d, and is connected to the first curved surface 51f.

The radius of curvature of the curved surface 51e of the upper wing surface 51c (for example, 396 mm or more) is set to be smaller than the radius of curvature of the first curved surface 51f of the lower wing surface 51d (for example, 1800 mm or more). In other words, the radius of curvature of the first curved surface 51f of the lower wing surface 51d of the second horizontal flap 51 is set within the range of 4 to 5 times the radius of curvature of the curved surface 51e of the upper wing surface 51c of the second horizontal flap 51.

Except for both ends of the longitudinal direction of the second horizontal flap 51, the shape of the cross section along the lateral direction is formed to be the same. Conversely, both ends of the longitudinal direction of the second horizontal flap 51 show a cross-sectional shape different from the shape of other parts of the second horizontal flap 51.

In more detail, the upper wing surface 51c at both ends of the longitudinal direction of the second horizontal flap 51 does not include the curved surface 51e. The lower wing surface 51d at both ends of the longitudinal direction of the second horizontal flap 51 does not include the first and second curved surfaces 51f and 51g. FIG. 14 shows a region where the curved surface 51e is formed by the dotted line.

In the air conditioner having the above-described configuration, when the operation of the first airflow control mode (for example, heating operation) is executed, the distance between the first horizontal flap 41 and the second horizontal flap 51 is wider on the downstream side of the flow of the blow-out air than on the upstream side of the flow of the blow-out air, and the blow-out air flows diagonally downward on the opposite side of the wall surface W side. At this time, part of the blow-out air flows along the lower wing surface 41d of the first horizontal flap 41. Since the lower wing surface 41d of the first horizontal flap 41 includes the curved surface 41f, which is a protrusion, the Coanda effect in the lower wing surface 41d of the first horizontal flap 41 is enhanced. As a result, part of the blow-out air is strongly drawn to the lower wing surface 41d of the first horizontal flap 41. Meanwhile, another part of the blow-out air flows along the upper wing surface 51c of the second horizontal flap. Since the upper wing surface 51c of the second horizontal flap 51 includes the curved surface 51e, which is a protrusion, the Coanda effect in the upper wing surface 51c of the second horizontal flap 51 is enhanced. As a result, another part of the blow-out air is strongly drawn to the upper wing surface 51c of the second horizontal flap 51.

In this way, while part of the blow-out air is strongly drawn to the lower wing surface 41d of the first horizontal flap 41, another part of the blow-out air is strongly drawn to the lower wing surface 5 1d of the second horizontal flap 51, making it possible to inhibit the separation of airflow from the first and second horizontal flaps 41 and 51.

When the operation of the first airflow control mode is executed, the distance between the first horizontal flap 41 and the second horizontal flap 51 on the downstream side is wider than the distance between the first horizontal flap 41 and the second horizontal flap 51 on the upstream side, and the blow-out air flows diagonally downward on the front side, and therefore the blow-out air can be applied, for example, to a wide range of the floor facing the indoor space R.

With the distance between the first horizontal flap 41 and the second horizontal flap 51 on the downstream side of the flow of the blow-out air greatly wider than the distance between the first horizontal flap 41 and the second horizontal flap 51 on the upstream side of the flow of the blow-out air, it is possible to inhibit the separation of airflow from the first and second horizontal flaps 41 and 51, and therefore the blow-out air can be greatly expanded in the up-and-down direction.

Part of the air from the blow-out channel 37 passes between the leading edge of the blow-out port 34 and the first end 41a of the first horizontal flap 41, and flows between the casing body 31 and the upper wing surface 41c of the first horizontal flap 41. At this time, since the upper wing surface 41c of the first horizontal flap 41 includes the curved surface 41e, which is a recess, the Coanda effect in the upper wing surface 41c of the first horizontal flap 41 is enhanced. As a result, part of the air is drawn to the upper wing surface 41c of the first horizontal flap 41 and flows along the upper wing surface 41c of the first horizontal flap 41. Therefore, for example, when the air from the blow-out channel 37 is cold air, the upper wing surface 41c of the first horizontal flap 41 can be covered with the cold air to inhibit dew condensation on the upper wing surface 41c of the first horizontal flap 41.

Another part of the air from the blow-out channel 37 passes between the trailing edge of the blow-out port 34 and the first end 51a of the second horizontal flap 51, and flows between the wall surface W and the lower wing surface 51d of the second horizontal flap 51. At this time, since the lower wing surface 5 1d of the second horizontal flap 51 includes the curved surface 51e, which is a recess, the Coanda effect in the lower wing surface 5 1d of the second horizontal flap 51 is enhanced. As a result, another part of the air is drawn to the lower wing surface 51d of the second horizontal flap 51 and flows along the lower wing surface 51d of the second horizontal flap 51. Therefore, for example, when the air from the blow-out channel 37 is cold air, the lower wing surface 51d of the second horizontal flap 51 can be covered with the cold air to inhibit dew condensation on the lower wing surface 51d of the second horizontal flap 51.

In the first airflow control mode, since the separation angle between the first horizontal flap 41 and the second horizontal flap 51 is set to, for example, 60°, the blow-out air can be surely expanded in the up-and-down direction.

Since the inclination angles θ1 and θ2 of the virtual planes V1 and V2 with respect to the horizontal plane H are larger in the first airflow control mode than in the second airflow control mode, the blow-out air can be surely flowed diagonally downward on the front side.

In the first airflow control mode, each perpendicular flap 61 of the first perpendicular flap group G1 pivots such that the downstream end of the flow of the blow-out air approaches the left side, whereas each perpendicular flap 61 of the second perpendicular flap group G2 pivots such that the downstream end of the flow of the blow-out air approaches the right side. With this configuration, the substantial shape of the air flow path formed by the plurality of perpendicular flaps 61 of the first and second perpendicular flap groups G1 and G2 is a shape spreading out from the upstream side to the downstream side of the flow of the blow-out air. As a result, the blow-out air can be expanded in the right-and-left direction.

The air conditioner, provided with the indoor unit 1, can inhibit the separation of airflow from the first and second horizontal flaps 41 and 51, and therefore can expand the blow-out air in the up-and-down direction and reduce air conditioning unevenness.

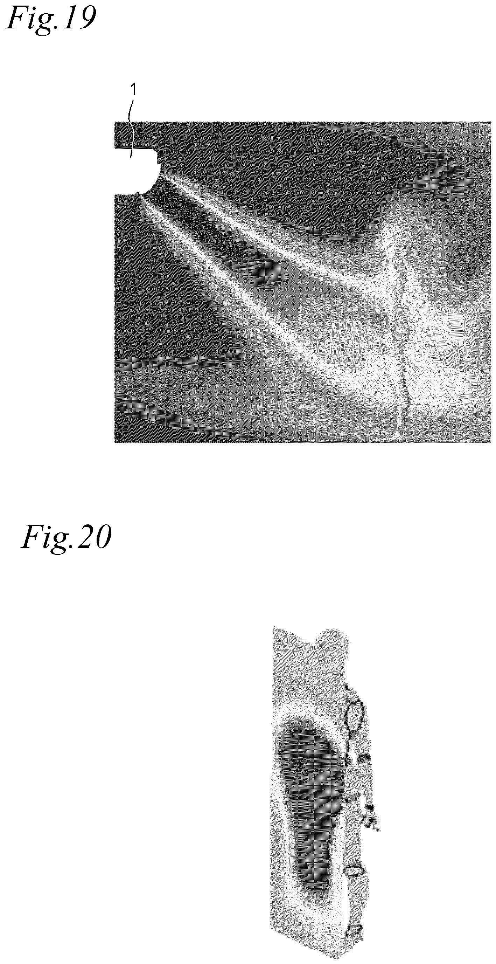

FIG. 19 is a diagram showing a result of simulating the up-and-down expansion of the blow-out air of the indoor unit 1 in the first airflow control mode.

The blow-out air of the indoor unit 1 was expanded in the up-and-down direction and hits the user from the upper body to the lower body. Therefore, when the indoor unit 1 executes the heating operation, as shown in FIG. 20, it was possible to enlarge the region with the highest temperature (region with the darkest color in FIG. 20) on the surface on the indoor unit 1 side of the user.

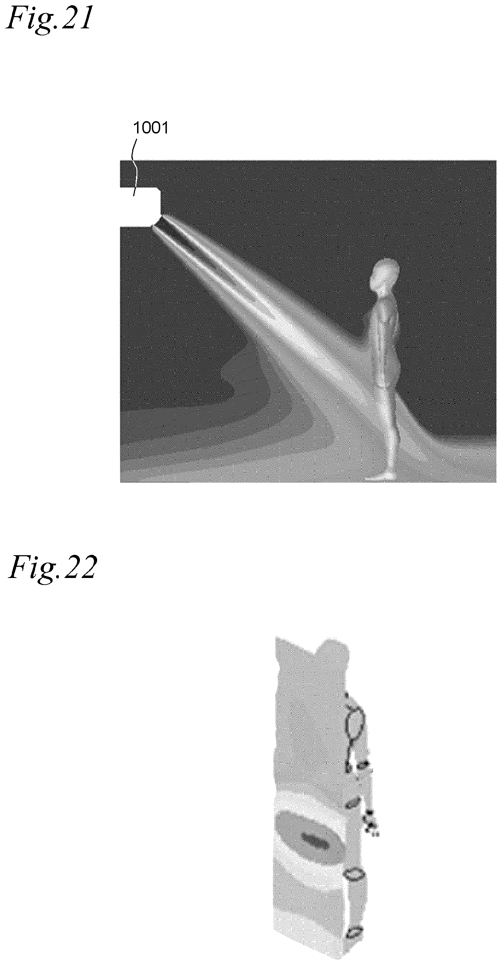

FIG. 21 is a diagram showing a result of simulating the up-and-down expansion of the blow-out air of an indoor unit 1001 of a comparative example.

The indoor unit 1001 of the comparative example differs from the indoor unit 1 only in that conventional first and second horizontal flaps were provided. The inclination angle of the conventional first and second horizontal flaps with respect to the horizontal plane was set in a similar manner to the simulation of FIG. 19. Each of a lower wing surface and an upper wing surface of the conventional first and second horizontal flaps did not include a curved surface and is a flat surface.

The blow-out air of such an indoor unit 1001 was not expanded in the up-and-down direction and hits the user only in the lower body. Therefore, when the indoor unit 1001 executed the heating operation, as shown in FIG. 22, the region with the highest temperature (region with the darkest color in FIG. 22) on the surface on the indoor unit 1001 side of the user was not large.

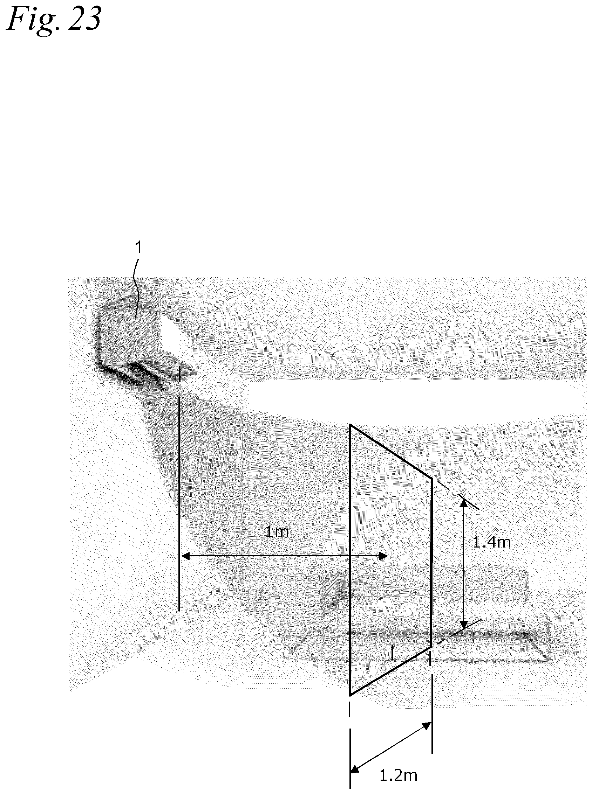

FIG. 23 is an image diagram of up-and-down and right-and-left expansion of the blow-out air of the indoor unit 1.

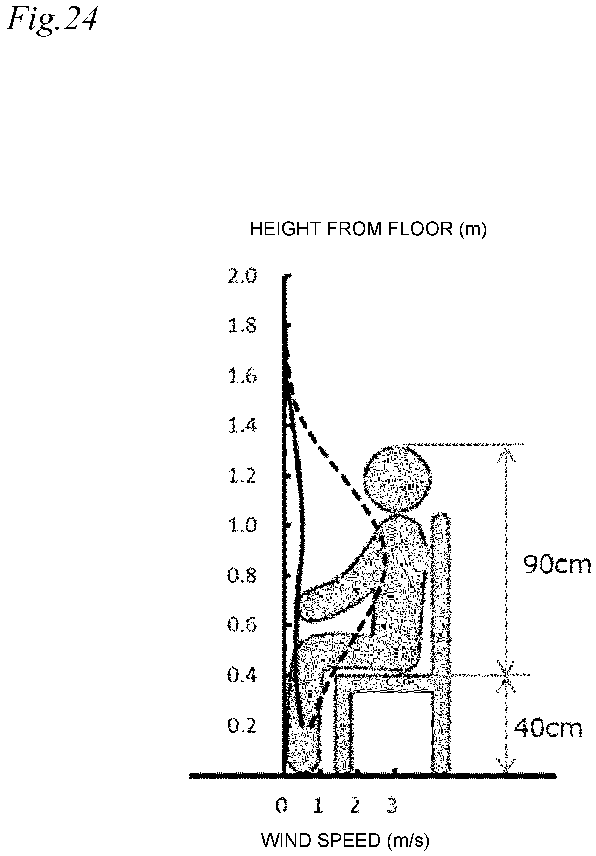

At a location of 1 m in front of the indoor unit 1, the blow-out air passed through a region of, for example, 1.4 m in length × 1.2 m in width. At this time, when a person sit on a chair placed at the location, it was possible to reduce the unevenness of the wind speed of the blow-out air that hits each part of the person, as shown by the solid line in FIG. 24. Moreover, it was possible to set the wind speed of the blow-out air that hits each part of the person to 1 m/s or less. Meanwhile, in the operation of the indoor unit 1001 of the comparative example, as shown by the dotted line in FIG. 24, the unevenness of the wind speed of the blow-out air that hit each part of the person was large. It was possible to set the wind speed of the blow-out air that hit below the knees of the person to around 1 m/s, but the wind speed of the blow-out air that hits the chest of the person exceeded 2 m/s.

In this way, it was possible for the indoor unit 1 to send a gentle wind to each part of the user substantially evenly more than the indoor unit 1001 of the comparative example.

### <Heating operation in first to third airflow control modes>

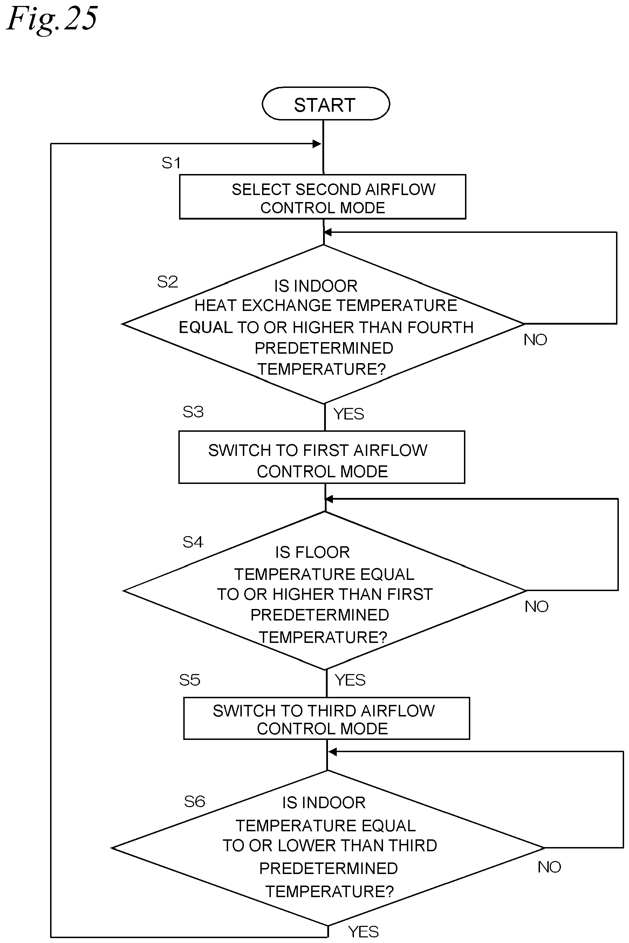

Hereinafter, the heating operation in the first to third airflow control modes will be described with reference to the flowchart of FIG. 25. The heating operation starts, for example, by the user manipulating the remote control device and is controlled by the control device 100.

To begin with, when the heating operation starts, the second airflow control mode is selected in step S1. Accordingly, the first and second horizontal flaps 41 and 51 are in the posture shown in FIG. 6. At this time, the blow-out air of the indoor unit 1 flows forward of the indoor unit 1 along the ceiling as shown in FIG. 26.

Next, it is determined in step S2 whether the temperature of the indoor heat exchanger 15 detected by the indoor heat exchanger temperature sensor T4 (hereinafter referred to as "indoor heat exchange temperature") is equal to or higher than a fourth predetermined temperature (for example, 40°C). Step S2 is repeated until it is determined that the indoor temperature is equal to or higher than the forth predetermined temperature. The fourth predetermined temperature is a temperature for ensuring that hot air is supplied to the indoor space R.

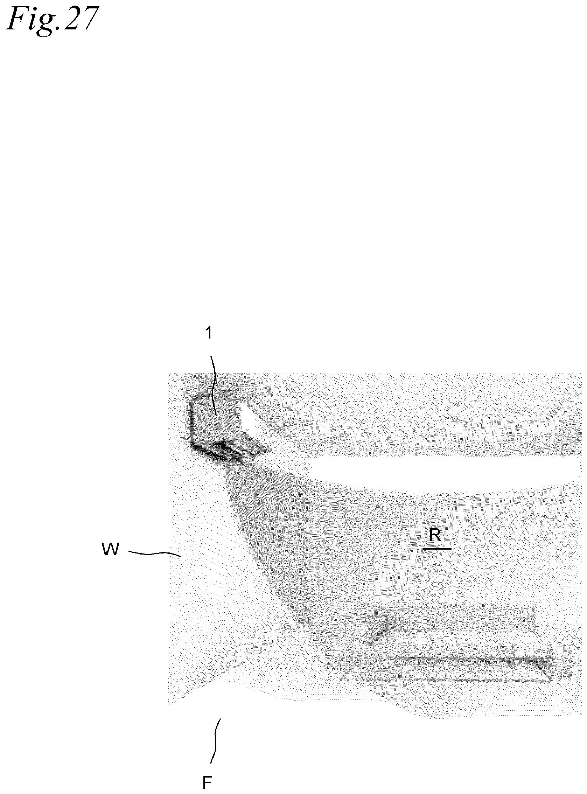

Next, in step S3, the second airflow control mode is switched to the first airflow control mode. Accordingly, the first and second horizontal flaps 41 and 51 are in the posture shown in FIG. 5. At this time, the blow-out air of the indoor unit 1 flows diagonally downward in front of the indoor unit 1 as shown in FIG. 27.

Next, it is determined in step S4 whether the temperature of the floor F detected by the floor temperature sensor T6 (hereinafter referred to as "floor temperature") is equal to or higher than a first predetermined temperature. Step S4 is repeated until it is determined that the floor temperature is equal to or higher than the first predetermined temperature. The first predetermined temperature is set to, for example, a temperature 3°C higher than the set temperature for the indoor temperature.

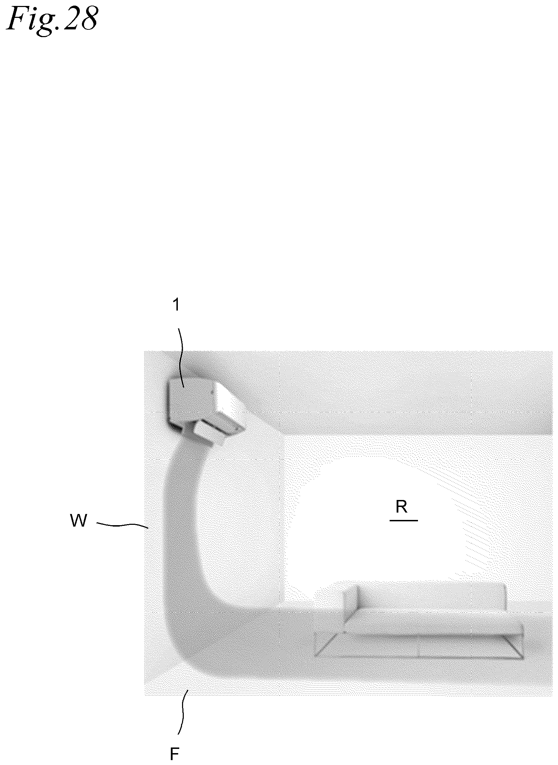

Next, in step S5, the first airflow control mode is switched to the third airflow control mode. Accordingly, the first and second horizontal flaps 41 and 51 are in the posture shown in FIG. 7. At this time, the blow-out air of the indoor unit 1 flows downward of the indoor unit 1 along the wall surface W as shown in FIG. 28.

Next, it is determined in step S6 whether the indoor temperature detected by the indoor temperature sensor T5 is equal to or higher than a third predetermined temperature. Step S6 is repeated until it is determined that the indoor temperature is equal to or higher than the third predetermined temperature. The third predetermined temperature is set to, for example, a temperature higher than the set temperature for the indoor temperature by a predetermined temperature. In other words, the third predetermined temperature is set such that step S6 ends when the difference between the set temperature and the indoor temperature detected by the indoor temperature sensor T5 becomes smaller than a predetermined value.

When it is determined in step S6 that the indoor temperature is equal to or higher than the third predetermined temperature, the process returns to step S1. Accordingly, the third airflow control mode is switched to the first airflow control mode. At this time, to switch the third airflow control mode to the first airflow control mode, the first and second horizontal flaps 41 and 51 are driven. This drive is executed after the number of revolutions of the indoor fan 10 is raised by a predetermined number of revolutions. Here, the predetermined number of revolutions is, for example, the number of revolutions by which the wind speed of the blow-out air is increased by one step.

In this way, when the heating operation starts, the second airflow control mode, the first airflow control mode, and the third airflow control mode are selected in this order, making it possible to warm the entire indoor space R efficiently.

In the first airflow control mode, the distance between the first horizontal flap 41 and the second horizontal flap 51 is wider on the downstream side of the flow of the blow-out air than on the upstream side of the flow of the blow-out air. Accordingly, the blow-out air flows in a spreading out manner, so that the wind speed of each part of the blow-out air is reduced. Therefore, in the heating operation, it is possible to inhibit the user from feeling cold even if the blow-out air hits the user.

The first airflow control mode is switched to the third airflow control mode when the floor temperature detected by the floor temperature sensor T6 becomes equal to or higher than the first predetermined temperature. Therefore, it is possible to inhibit the heating operation of the third airflow control mode when the floor F is not warm.

Switching to the third airflow control mode allows the heating operation to be continued while reducing the possibility that the blow-out air will hit the user.

The third airflow control mode may be switched to the first airflow control mode when the indoor temperature detected by the indoor temperature sensor T5 becomes equal to or lower than the third predetermined temperature. In this case, it possible to effectively inhibit the indoor space R from getting cold.

When the third airflow control mode is switched to the first airflow control mode, after the number of revolutions of the indoor fan 10 is increased by the predetermined number of revolutions, the posture of the first and second horizontal flaps 41 and 51 is changed. In this case, it possible to inhibit the separation of the airflow from the first and second horizontal flaps 41 and 51.

In the third airflow control mode, the blow-out air flows downward along the wall surface W, greatly reducing the possibility that the blow-out air directly hits the user.

In the first embodiment, the air conditioner is a pair type including one indoor unit 1 and one outdoor unit 2, but may be a multi-type including a plurality of indoor units 1 and one outdoor unit 2.

In the first embodiment, for example, in the cooling operation, in the dehumidifying operation, or in the heating operation, the control device 100 may appropriately select one of the first airflow control mode, the second airflow control mode, the third airflow control mode, and the fourth airflow control mode, or may switch between those modes, based on signals from the indoor temperature sensor T5 and the like.

In the first embodiment, for example, in the cooling operation, in the dehumidifying operation, or in the heating operation, the user may be allowed to select a desired mode with, for example, the remote control device from among the first airflow control mode, the second airflow control mode, the third airflow control mode, and the fourth airflow control mode.

In the first embodiment, the separation angle of the first horizontal flap 41 and the second horizontal flap 51 is set to 60°, but may be other than 60°. In this case, the separation angle is set to be within the range of, for example, 53° to 60°.

In the first embodiment, in the first airflow control mode, with respect to the perpendicular flap 61 located at the left end of the plurality of perpendicular flaps 61 and the perpendicular flap 61 located at the right end of the plurality of perpendicular flaps 61, the distance on the downstream side is wider than the distance on the upstream side, but the distance may be substantially the same. In short, in the first airflow control mode, the control for expanding the blow-out air in the right-and-left direction may be executed, or the control for expanding the blow-out air in the right-and-left direction may not be executed

In the first embodiment, it is determined whether to switch the first airflow control mode to the third airflow control mode only based on the floor temperature, but for example, it may be determined based on the floor temperature and the indoor temperature.

In the first embodiment, it is determined whether to switch the third airflow control mode to the first airflow control mode only based on the indoor temperature, but for example, it may be determined based on the indoor temperature and the outdoor air temperature.

In the first embodiment, when the third airflow control mode is switched to the first airflow control mode, after the number of revolutions of the indoor fan 10 is increased by the predetermined number of revolutions, the posture of both the first and second horizontal flaps 41 and 51 is changed, but the posture of one of the first and second horizontal flaps 41 and 51 may be changed.

In the first embodiment, it is determined whether to switch the third airflow control mode to the first airflow control mode only based on the indoor temperature, but for example, it may be determined based on the indoor temperature and the floor temperature.

In the first embodiment, in the third airflow control mode, the blow-out air flows downward along the wall surface W, but the blow-out air does not have to follow the wall surface W, and the blow-out air may flow on the wall surface W side more than in the first airflow control mode. In other words, in the third airflow control mode, the inclination angle θ1 of the virtual plane V1 with respect to the horizontal plane H may satisfy, for example, +10° < θ1 < +105°, or the inclination angle θ2 of the virtual plane V2 with respect to the horizontal plane H may satisfy, for example, +70° < θ2 < +100°.

### [Second embodiment]

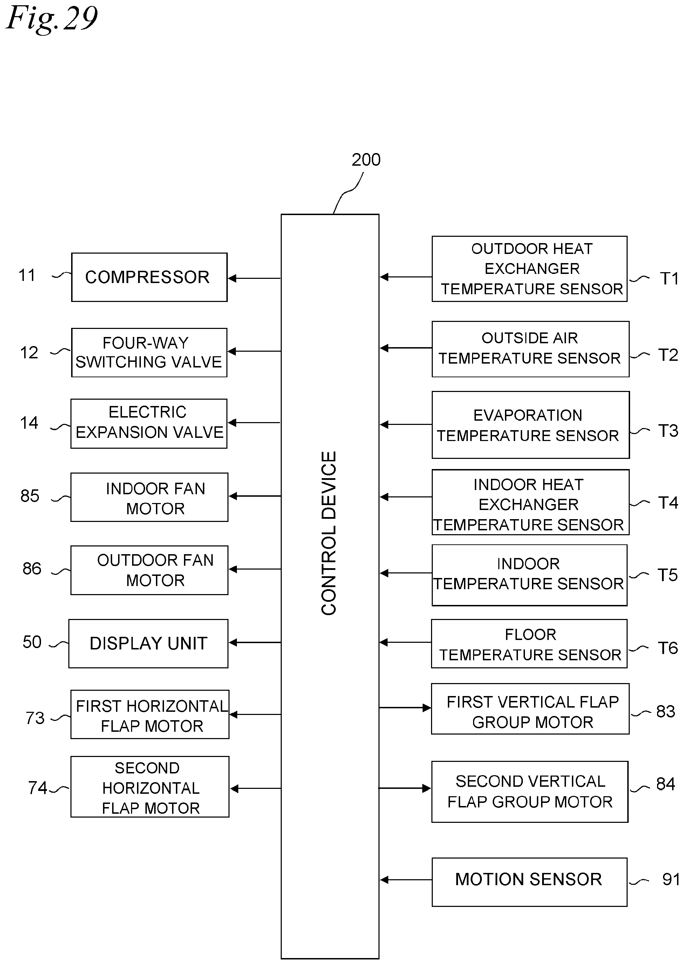

FIG. 29 is a control block diagram of an air conditioner of a second embodiment of the present disclosure.

An indoor unit of the air conditioner includes a motion sensor 91 that detects a distance to a person in an indoor space R. A control device 200 controls first and second horizontal flap motors 73 and 74 based on a detection result of the motion sensor 91.

In more detail, in a third airflow control mode, when the distance detected by the motion sensor 91 is equal to or less than a predetermined distance (for example, 1 m), the control device 200 switches the third airflow control mode to a first airflow control mode. Note that the distance is, for example, the distance in the front-and-rear direction between the indoor unit and the person.

The air conditioner having the above-described configuration has the same effects as the effects of the first embodiment, and the third airflow control mode switches to the first airflow control mode when the distance detected by the motion sensor 91 becomes equal to or less than the predetermined distance, and therefore the blow-out air of the indoor unit can be directly hit to the person in the indoor space R timely.

Specific embodiments of the present invention have been described, but the present invention is not limited to the first and second embodiments and modifications thereof, and various changes can be made within the scope of the appended claims.

### REFERENCE SIGNS LIST

- 1: indoor unit
- 2: outdoor unit
- 10: indoor fan
- 11: compressor
- 12: four-way switching valve
- 13: outdoor heat exchanger
- 14: electric expansion valve
- 15: indoor heat exchanger
- 16: accumulator
- 20: outdoor fan
- 30: casing
- 34: blow-out port
- 41: first horizontal flap
- 41c, 51: cupper wing surface
- 41d, 51d: lower wing surface
- 41e, 41f, 51e: curved surface
- 51: second horizontal flap
- 51f: first curved surface
- 51g: second curved surface
- 61: perpendicular flap
- 73: first horizontal flap motor
- 74: second horizontal flap motor
- 83: first perpendicular flap group motor
- 84: second perpendicular flap group motor
- 91: motion sensor
- 100, 200: control device
- G1: first perpendicular flap group
- G2: second perpendicular flap group
- L1, L2: connection pipe
- RC: refrigerant circuit
- T1: outdoor heat exchanger temperature sensor
- T2: outdoor air temperature sensor
- T3: evaporation temperature sensor
- T4: indoor heat exchanger temperature sensor
- T5: indoor temperature sensor
- T6: floor temperature sensor
- θ1, θ2: inclination angle

## Claims

1. An air conditioning indoor unit (1) comprising:
a casing (30) configured for being attached to a wall surface (W) facing an air conditioning target space (R), the casing (30) including a blow-out port (34);
a fan (10) disposed in the casing (30) and configured to send air to the blow-out port (34);
a first horizontal blade (41) configured to adjust an up-and-down wind direction of blow-out air flowing from the blow-out port (34) to the air conditioning target space (R);
a first drive unit (73) configured to drive the first horizontal blade (41);
a second horizontal blade (51) disposed on a side of the wall surface (W) of the first horizontal blade (41) and configured to adjust the up-and-down wind direction of the blow-out air;
a second drive unit (74) configured to drive the second horizontal blade (51); and
a control device (100, 200) configured to control the fan (10) and the first and second drive units (73, 74), wherein
the air conditioning indoor unit (1) is capable of performing a heating operation
in a first airflow control mode in which a distance between the first horizontal blade (41) and the second horizontal blade (51) is wider on a downstream side of a flow of the blow-out air than on an upstream side of the flow of the blow-out air, the blow-out air flows diagonally downward on an opposite side of the wall surface (W) side, part of the blow-out air flows along a lower wing surface (41d) of the first horizontal blade (41), and another part of the blow-out air flows along an upper wing surface (5 1c) of the second horizontal blade (51), and
in a third airflow control mode in which the blow-out air flows on the wall surface (W) side more than in the first airflow control mode,
in the third airflow control mode, the blow-out air flowing downward along the wall surface (W),
**characterized in that**:
the air conditioning indoor unit (1) is capable of performing a heating operation in a second airflow control mode in which the blow-out air flows along a horizontal direction,
the control device (100, 200) is configured to switch the second airflow control mode, the first airflow control mode, and the third airflow control mode in this order after the heating operation starts,
the air conditioning indoor unit (1) further comprises an indoor temperature sensor (T5) configured to detect an indoor temperature, and
in the third airflow control mode, at least when the indoor temperature detected by the indoor temperature sensor (T5) becomes equal to or lower than a third predetermined temperature, the control device (100, 200) is configured to switch the third airflow control mode to the first airflow control mode.

2. The air conditioning indoor unit (1) according to claim 1, further comprising a floor temperature sensor (T6) configured to detect a temperature of a floor (F) facing the air conditioning target space (R), wherein
in the first airflow control mode, at least when the temperature of the floor (F) detected by the floor temperature sensor (T6) becomes equal to or higher than a first predetermined temperature, the control device (100, 200) is configured to switch the first airflow control mode to the third airflow control mode.

3. The air conditioning indoor unit (1) according to claim 1, wherein
when the third airflow control mode is switched to the first airflow control mode, the control device (100, 200) is configured to control the fan (10) and the first and second drive units (73, 74) to cause at least one of the first and second horizontal blades (51) to be driven after a number of revolutions of the fan (10) increases.

4. An air conditioner comprising:
the air conditioning indoor unit (1) according to any one of claims 1 to 3; and
an air conditioning outdoor unit (2) connected to the air conditioning indoor unit (1) via a refrigerant pipe (L1, L2).

## Patentansprüche

1. Klimaanlage-Innenraumeinheit (1), umfassend:
ein Gehäuse (30), das dafür ausgebildet ist, an einer einem Zielraum (R) der Klimaanlage zugewandten Wandoberfläche (W) angebracht zu werden, wobei das Gehäuse (30) eine Ausblasöffnung (34) einschließt;
ein Gebläse (10), das in dem Gehäuse (30) angeordnet und so ausgebildet ist, dass es Luft zu der Ausblasöffnung (34) sendet;
eine erste horizontale Schaufel (41), die so ausgebildet ist, dass sie eine Aufund Abwindrichtung der Ausblasluft einstellt, die von der Ausblasöffnung (34) in den Zielraum (R) der Klimaanlage strömt;
eine erste Antriebseinheit (73), die so ausgebildet ist, dass sie die erste horizontale Schaufel (41) antreibt;
eine zweite horizontale Schaufel (51), die auf einer Seite der Wandoberfläche (W) der ersten horizontalen Schaufel (41) angeordnet und so ausgebildet ist, dass sie die Auf- und Abwindrichtung der Ausblasluft einstellt;
eine zweite Antriebseinheit (74), die so ausgebildet ist, dass sie die zweite horizontale Schaufel (51) antreibt; und
eine Steuervorrichtung (100, 200), die so ausgebildet ist, dass sie das Gebläse (10) und die erste und zweite Antriebseinheit (73, 74) steuert, wobei
die Klimaanlage-Innenraumeinheit (1) der Klimaanlage dazu in der Lage ist, einen Heizvorgang durchzuführen,
in einem ersten Luftstromsteuerungsmodus, in dem ein Abstand zwischen der ersten horizontalen Schaufel (41) und der zweiten horizontalen Schaufel (51) auf einer stromabwärtigen Seite eines Stroms der Ausblasluft größer ist als auf einer stromaufwärtigen Seite des Stroms der Ausblasluft, die Ausblasluft auf einer gegenüberliegenden Seite der Wandoberfläche (W) diagonal nach unten strömt, ein Teil der Ausblasluft entlang einer unteren Flügelfläche (41d) der ersten horizontalen Schaufel (41) strömt, und ein anderer Teil der Ausblasluft entlang einer oberen Flügelfläche (51c) der zweiten horizontalen Schaufel (51) strömt, und
in einem dritten Luftstromsteuerungsmodus, in dem die Ausblasluft auf der Seite der Wandoberfläche (W) stärker strömt als im ersten Luftstromsteuerungsmodus,
in dem dritten Luftstromsteuerungsmodus die Ausblasluft entlang der Wandoberfläche (W) nach unten strömt,
**dadurch gekennzeichnet, dass**:
das Klimaanlage-Innenraumeinheit (1) dazu in der Lage ist, einen Heizvorgang in einem zweiten Luftstromsteuerungsmodus durchzuführen, in dem die Ausblasluft entlang einer horizontalen Richtung strömt,
die Steuervorrichtung (100, 200) so ausgebildet ist, dass sie den zweiten Luftstromsteuerungsmodus, den ersten Luftstromsteuerungsmodus und den dritten Luftstromsteuerungsmodus in dieser Reihenfolge umschaltet, nachdem der Heizvorgang beginnt,
wobei die Klimaanlage-Innenraumeinheit (1) weiter einen Innenraumtemperatursensor (T5) umfasst, der so ausgebildet ist, dass er eine Innenraumtemperatur erfasst, und
in dem dritten Luftstromsteuerungsmodus zumindest dann, wenn die von dem Innenraumtemperatursensor (T5) erfasste Innenraumtemperatur gleich oder niedriger als eine dritte vorbestimmte Temperatur wird, die Steuervorrichtung (100, 200) so ausgebildet ist, dass sie den dritten Luftstromsteuerungsmodus auf den ersten Luftstromsteuerungsmodus umschaltet.

2. Klimaanlage-Innenraumeinheit (1) nach Anspruch 1, weiter umfassend einen Bodentemperatursensor (T6), der so ausgebildet ist, dass er eine Temperatur eines Bodens (F) erfasst, der dem Zielraum (R) der Klimaanlage gegenüberliegt, wobei
in dem ersten Luftstromsteuerungsmodus zumindest dann, wenn die von dem Bodentemperatursensor (T6) erfasste Temperatur des Bodens (F) gleich oder höher als eine erste vorbestimmte Temperatur wird, die Steuervorrichtung (100, 200) so ausgebildet ist, dass sie den ersten Luftstromsteuerungsmodus in den dritten Luftstromsteuerungsmodus umschaltet.

3. Klimaanlage-Innenraumeinheit (1) nach Anspruch 1, wobei
wenn der dritte Luftstromsteuerungsmodus in den ersten Luftstromsteuerungsmodus umgeschaltet wird, die Steuervorrichtung (100, 200) so ausgebildet ist, dass sie das Gebläse (10) und die erste und zweite Antriebseinheit (73, 74) steuert, um zu bewirken, dass mindestens eine der ersten und zweiten horizontalen Schaufel (51) angetrieben wird, nachdem eine Anzahl von Umdrehungen des Gebläses (10) zunimmt.

4. Klimaanlage, umfassend:
die Klimaanlage-Innenraumeinheit (1) nach einem der Ansprüche 1 bis 3; und
eine Klimaanlage-Außeneinheit (2), die über eine Kältemittelleitung (L1, L2) mit der Klimaanlage-Innenraumeinheit (1) verbunden ist.

## Revendications

1. Unité intérieure de climatisation (1) comprenant :
un boîtier (30) configuré de manière à être fixé à une surface de paroi (W) faisant face à un espace cible de climatisation (R), le boîtier (30) incluant un orifice de soufflage (34) ;
un ventilateur (10) agencé dans le boîtier (30) et configuré de manière à envoyer de l'air en direction de l'orifice de soufflage (34) ;
une première pale horizontale (41) configurée de manière à régler une direction de vent ascendante et descendante d'un air de soufflage s'écoulant à partir de l'orifice de soufflage (34) en direction de l'espace cible de climatisation (R) ;
une première unité d'entraînement (73) configurée de manière à entraîner la première pale horizontale (41) ;
une seconde pale horizontale (51) agencée sur un côté de la surface de paroi (W) de la première pale horizontale (41) et configurée de manière à régler la direction de vent ascendante et descendante de l'air de soufflage ;
une seconde unité d'entraînement (74) configurée de manière à entraîner la seconde pale horizontale (51) ; et
un dispositif de commande (100, 200) configuré de manière à commander le ventilateur (10) et les première et seconde unités d'entraînement (73, 74), dans laquelle
l'unité intérieure de climatisation (1) est capable d'effectuer une opération de chauffage
dans un premier mode de commande d'écoulement d'air dans lequel une distance entre la première pale horizontale (41) et la seconde pale horizontale (51) est plus large sur un côté aval d'un écoulement de l'air de soufflage que sur un côté amont de l'écoulement de l'air de soufflage, l'air de soufflage s'écoule en diagonale vers le bas sur un côté opposé au côté de surface de paroi (W), une partie de l'air de soufflage s'écoule le long d'une surface d'aile inférieure (41d) de la première pale horizontale (41), et une autre partie de l'air de soufflage s'écoule le long d'une surface d'aile supérieure (51c) de la seconde pale horizontale (51), et
dans un troisième mode de commande d'écoulement d'air dans lequel l'air de soufflage s'écoule davantage sur le côté de surface de paroi (W) comparativement au premier mode de commande d'écoulement d'air,
dans le troisième mode de commande d'écoulement d'air, l'air de soufflage s'écoule vers le bas le long de la surface de paroi (W),
**caractérisée en ce que** :
l'unité intérieure de climatisation (1) est capable d'effectuer une opération de chauffage dans un deuxième mode de commande d'écoulement d'air dans lequel l'air de soufflage s'écoule le long d'une direction horizontale,
le dispositif de commande (100, 200) est configuré de manière à commuter le deuxième mode de commande d'écoulement d'air, le premier mode de commande d'écoulement d'air et le troisième mode de commande d'écoulement d'air dans cet ordre après le début de l'opération de chauffage,
l'unité intérieure de climatisation (1) comprend en outre un capteur de température intérieure (T5) configuré de manière à détecter une température intérieure, et
dans le troisième mode de commande d'écoulement d'air, au moins lorsque la température intérieure détectée par le capteur de température intérieure (T5) devient égale ou inférieure à une troisième température prédéterminée, le dispositif de commande (100, 200) est configuré de manière à commuter le troisième mode de commande d'écoulement d'air vers le premier mode de commande d'écoulement d'air.

2. Unité intérieure de climatisation (1) selon la revendication 1, comprenant en outre un capteur de température de sol (T6) configuré de manière à détecter une température d'un sol (F) faisant face à l'espace cible de climatisation (R), dans laquelle
dans le premier mode de commande d'écoulement d'air, au moins lorsque la température du sol (F) détectée par le capteur de température de sol (T6) devient égale ou supérieure à une première température prédéterminée, le dispositif de commande (100, 200) est configuré de manière à commuter le premier mode de commande d'écoulement d'air vers le troisième mode de commande d'écoulement d'air.

3. Unité intérieure de climatisation (1) selon la revendication 1, dans laquelle
lorsque le troisième mode de commande d'écoulement d'air est commuté vers le premier mode de commande d'écoulement d'air, le dispositif de commande (100, 200) est configuré de manière à commander le ventilateur (10) ainsi que les première et seconde unités d'entraînement (73, 74) pour amener au moins l'une des première et seconde pales horizontales (51) à être entraînée après qu'un nombre de tours du ventilateur (10) augmente.

4. Climatiseur comprenant :
l'unité intérieure de climatisation (1) selon l'une quelconque des revendications 1 à 3 ; et
une unité extérieure de climatisation (2) connectée à l'unité intérieure de climatisation (1) par l'intermédiaire d'un tuyau de réfrigérant (L1, L2).
